# EUROPÄISCHE PATENTSCHRIFT

(11) **EP 2 720 789 B1**
(45) Veröffentlichungstag und Bekanntmachung des Hinweises auf die Patenterteilung: **08.04.2020**
(21) Anmeldenummer: 12729869.3
(22) Anmeldetag: 15.06.2012
(51) Int. Cl.: B01J 21/06, B01J 23/22, B01J 37/00, C01G 23/04, C01G 31/02

(54) **HERSTELLUNG PORÖSER MATERIALIEN AUF BASIS VON OXIDEN DES TITANS UND/ODER DES VANADIUMS**
PRODUCTION OF TITANIUM OXIDE- AND/OR VANADIUM OXIDE-BASED POROUS MATERIALS
PRODUCTION DES MATÉRIAUX POREUX À BASE D'OXYDES DE TITANE ET/OU VANADIUM

(30) Priorität: 17.06.2011 DE 102011105188
(43) Veröffentlichungstag der Anmeldung: 23.04.2014
(60) Teilanmeldung: 19213552.3
(73) Patentinhaber: Blücher GmbH, 40699 Erkrath (DE)
(72) Erfinder: GLÄSER, Roger, 07749 Jena (DE); LUTECKI, Michael, 04103 Leipzig (DE); WITH, Patrick, 04425 Taucha (DE); HEINRICH, Astrid, 04103 Leipzig (DE); FICHTNER, Sven, 14727 Premnitz (DE); BÖHRINGER, Bertram, 42115 Wuppertal (DE)
(74) Vertreter: Von Rohr Patentanwälte Partnerschaft mbB
(86) Internationale Anmeldenummer: PCT/EP2012/002542
(87) Internationale Veröffentlichungsnummer: WO 2012/171655

(56) Entgegenhaltungen:
- EP-A1- 2 263 795
- EP-A2- 1 063 002
- DE-A1- 10 226 131
- ANGANG DONG ET AL: "General Synthesis of Mesoporous Spheres of Metal Oxides and Phosphates", JOURNAL OF THE AMERICAN CHEMICAL SOCIETY, Bd. 125, Nr. 17, 1. April 2003 (2003-04-01), Seiten 4976-4977, XP55036674, ISSN: 0002-7863, DOI: 10.1021/ja029964b
- FERDI SCHÜTH ET AL: "Endo- and Exotemplating to Create High-Surface-Area Inorganic Materials", ANGEWANDTE CHEMIE INTERNATIONAL EDITION, Bd. 42, Nr. 31, 11. August 2003 (2003-08-11), Seiten 3604-3622, XP55036678, ISSN: 1433-7851, DOI: 10.1002/anie.200300593
- SCHATTKA J H ET AL: "PHOTOCATALYTIC ACTIVITIES OF POROUS TITANIA AND TITANIA/ZIRCONIA STRUCTURES FORMED BY USING A POLYMER GEL TEMPLATING TECHNIQUE", CHEMISTRY OF MATERIALS, AMERICAN CHEMICAL SOCIETY, WASHINGTON, US, Bd. 14, Nr. 12, 1. Dezember 2002 (2002-12-01), Seiten 5103-5108, XP001501442, ISSN: 0897-4756, DOI: 10.1021/CM021238K
- P. WITH ET AL: "Zirconia with Defined Particle Morphology and Hierarchically Structured Pore System Synthesized via Combined Exo- and Endotemplating", CHEMICAL ENGINEERING & TECHNOLOGY, Bd. 33, Nr. 10, 1. Oktober 2010 (2010-10-01), Seiten 1712-1716, XP55037118, ISSN: 0930-7516, DOI: 10.1002/ceat.201000196
- "Elementarer Kohlenstoff, Graphit" In: "Lehrbuch der Anorganischen Chemie", 31 December 1985 (1985-12-31), Walter de Gruyter, Berlin, New York, XP055193905, ISBN: 978-3-11-007511-3 page 708,

## Beschreibung

Die vorliegende Erfindung betrifft das technische Gebiet poröser Materialien, insbesondere selbsttragender poröser Materialien, auf Basis von Oxiden von Titan und/oder Vanadium, und zwar deren Herstellung.

Insbesondere betrifft die vorliegende Erfindung ein Verfahren zur Herstellung von porösen Materialien auf Basis von Oxiden des Titans und/oder des Vanadiums (d. h. also Titanoxid, Vanadiumoxid, Titan/Vanadium-Mischoxide sowie Mischungen von Titanoxid und Vanadiumoxid), insbesondere ein Verfahren zur Herstellung von Partikeln von Oxiden des Titans und/oder des Vanadiums, mittels Templatverfahren (Templatsynthese). Vorliegend sind auch die auf diese Weise erhältlichen porösen Materialien und deren Verwendung, insbesondere für den Bereich der Katalyse, der Behandlung von Abgasen, die Anwendung in Gassensoren, die Anwendung in Brennstoffzellen oder dergleichen, beschrieben.

Die Anwendungsmöglichkeiten von metalloxidischen Systemen sind äußerst vielfältig: Metalloxide finden insbesondere Verwendung als Katalysatoren oder Katalysatorträger für unterschiedlichste Anwendungen, aber auch in anderen Bereichen, wie beispielsweise in der Brennstoffzellentechnologie, in Gassensoren, bei der katalytischen Abgasbehandlung oder dergleichen.

Speziell die Oxide von Titan und/oder Vanadium, insbesondere Titandioxid (TiO₂) und/oder Vanadiumpentoxid (V₂O₅) sowie deren Mischungen und Mischoxide, finden im Stand der Technik weitreichende Verwendung, insbesondere als Katalysatoren bzw. Bestandteile von Katalysatoren, d. h. zu Zwecken der Katalyse chemischer Reaktionen, aber auch in anderen Anwendungsbereichen, insbesondere bei der Behandlung von Abgasen.

Als nichtbeschränkende Beispiele lässt sich insbesondere die Verwendung von Vanadiumpentoxid (V₂O₅) als Heterogenkatalysator für Oxidationsreaktionen, wie beispielsweise die Schwefelsäureherstellung nach dem sogenannten Kontaktverfahren, nennen. Auch reines Titandioxid, gegebenenfalls in Verbindung mit anderen Katalysatormetallen oder anderen katalytisch aktiven Motiven bzw. Komponenten, findet weitreichende Anwendung in der chemischen Katalyse, beispielsweise bei der Katalyse von Epoxidierungen (z. B. Umsetzung von Propen zu Propanoxid), Hydrogenierung (z. B. Kohleverflüssigung, Umsetzung von Tiophen zu Schwefelwasserstoff und Butan), der Isomerisierung (z. B. Umlagerung von alpha-Pinen zu Camphen, Umlagerung von Butan zu Isobutan etc.) und der sogenannten Aldol-Reaktion (z. B. Reaktion von Acetaldehyd zu 2-Butenaldehyd). Weiterhin findet Titandioxid beispielsweise bei Komproportionierungsreaktionen, insbesondere bei der Entstickung von Abgasen von Dieselmotoren, Anwendung, insbesondere in Kombination mit anderen Katalysatormetallen, wie z. B. Rhodium, Platin und/oder Palladium.

Auch kombinierte Katalysatoren auf Basis von Titanoxid/Vanadiumoxid (TiO₂/V₂O₅) finden weitreichende Anwendung, so beispielsweise bei der Entstickung von Abgasen, insbesondere aus chemischen Prozessen, sowie bei der Katalyse chemischer Reaktionen, insbesondere von Oxidationsreaktionen (z. B. Umsetzung von Benzol zu Maleinsäureanhydrid, Umsetzung von Butadien zu Maleinsäureanhydrid, Umsetzung von Buten zu Essigsäure und Acetaldehyd, Umsetzung von Methanol zu Formaldehyd, Umsetzung von o-Xylol zu Phthalsäureanhydrid, Umsetzung von 3-Methylpyridin zu 3-Carboxypyridin etc.).

Die vorgenannten Anwendungsbeispiele sind nicht beschränkend zu verstehen. Die Liste der Anwendungen ließe sich noch fortsetzen. Die vorgenannten Beispiele belegen jedoch das enorme Anwendungspotential und Leistungsvermögen derartiger System auf Basis von Titanoxid und/oder Vanadiumoxid. Folglich besteht ein enormer Bedarf an diesen Metalloxiden und an den entsprechenden Verfahren ihrer Herstellung. Daher hat es nicht an Versuchen gefehlt, Materialien auf Basis dieser Metalloxide bereitzustellen.

Eine aus dem Stand der Technik bekannte Methode besteht darin, die betreffenden Metalloxide auf einem vorzugsweise inerten Träger (z. B. Aluminiumoxid, Siliziumoxid, Aktivkohle etc.) bereitzustellen, was insbesondere durch Imprägnieren des betreffenden Trägers mit einer entsprechenden Salzlösung oder -dispersion der betreffenden Metallionen erfolgen kann, gefolgt von einer nachfolgenden Oxidation der Metallsalze zu den betreffenden Metalloxiden. Nachteil dieser Methode ist allerdings, dass die betreffenden Metalloxide nicht selbsttragend ausgebildet sind, sondern nur auf einem entsprechenden Träger vorliegen, so dass ein nicht unbeachtlicher Teil der spezifischen Oberfläche verlorengeht. Auch ist die katalytische Aktivität solcher Systeme nicht immer optimal, da die Kontaktflächen bzw. Oberflächen zu den betreffenden Metalloxiden nicht unmittelbar frei zugänglich sind.

Darüber hinaus existieren im Stand der Technik Fällungsmethoden, bei denen die betreffenden Metalloxide aus Lösungen von entsprechenden Präkursorsalzen der Metalle ausgefällt werden. Gegebenenfalls kann sich dann nach Abtrennung der ausgefällten Partikel eine thermische Behandlung anschließen. Bei dieser Methode werden jedoch meist nur amorphe Pulver mit geringer spezifischer Oberfläche und geringem spezifischen Porenvolumen erhalten.

Darüber hinaus wurde im Stand der Technik auch versucht, Metalloxide mittels Templatverfahren herzustellen, wobei die erhaltenen Produkte jedoch nicht immer ausreichend hohe spezifische Oberflächen und ausreichend große spezifische Porenvolumina aufweisen. Auch ist die mechanische Stabilität der erhaltenen Produkte nicht immer ausreichend. Auch der erreichte Kristallinitätsgrad entspricht nicht immer den gewünschten Anforderungen.

Die wissenschaftliche Publikation gemäß Dong et al, J. Am. Chem. Soc., 2003, 125, Seiten 4976 bis 4977 betrifft ein Verfahren zur Herstellung von mesoporösen Metalloxiden und Phosphaten unter Verwendung von kugelförmiger Kohle.

Weiterhin betrifft die EP 2 263 795 A1 Photokatalysatoren aus einem Titandioxidkern und einer Hülle aus Ruthenium und Platin sowie ein Verfahren zu deren Herstellung.

Darüber hinaus betrifft die Entgegenhaltung DE 102 26 131 A1 Materialien, welche während ihrer Herstellung auf eine Temperatur aufgeheizt werden, die über der späteren Einsatztemperatur liegt.

Zudem betrifft die wissenschaftliche Publikation gemäß Schüth F., Angw. Chem. Int. Ed., 2003, 42, Seiten 3604 bis 3622 einen Review-Artikel über die Verwendung von Endo- und Exotemplaten zur Erzeugung von anorganischen Materialien, welche die Form des Templats aufweisen sollen.

Die wissenschaftliche Publikation gemäß Schattka J. H. et al., Chem. Mater., 2002, 14, Seiten 5103 bis 5108 betrifft poröse Mischoxidstrukturen, welche unter Verwendung eines Polymergels als Matrixmaterial hergestellt werden sollen.

Weiterhin betrifft die Druckschrift EP 1 063 002 A2 einen Katalysator zur Entfernung von Organohalogenverbindunden auf Basis von Titandioxid und Vanadiumoxid, welcher eine bimodale Porenverteilung aufweist.

Zudem betrifft die wissenschaftliche Publikation gemäß With P. et al., Chem. Eng. Technol., 2010, 33, Seiten 1712 bis 1716 die Herstellung von Zirkoniumpartikeln mit einer kombinierten Exo- und Endotemplatsythese unter Verwendung von Aktivkohle als Exotemplat.

Schließlich betrifft der Lehrbuchauszug "Elementarer Kohlenstoff, Graphit", Seite 708, "Aktivkohlen" aus "Lehrbuch der Anorganischen Chemie", 31. Dezember 1985, Walter de Gruyter-Verlag, Berlin, New York, allgemeine Ausführungen zu Aktivkohle und deren Oberflächenentwicklung.

Es ist daher eine Aufgabe der vorliegenden Erfindung, poröse Materialien auf Basis von Oxiden des Titans und/oder des Vanadiums (d. h. also poröse Materialien auf Basis von Titanoxid oder aber poröse Materialien auf Basis von Vanadiumoxid oder aber poröse Materialien auf Basis von Titan/Vanadium-Mischoxiden oder aber poröse Materialien auf Basis von Mischungen von Titanoxid und Vanadiumoxid) und ein entsprechendes Herstellungsverfahren bereitzustellen, wobei die zuvor geschilderten Nachteile des Standes der Technik zumindest weitgehend vermieden oder aber wenigstens abgeschwächt werden sollen.

Insbesondere sollen im Rahmen der vorliegenden Erfindung poröse Materialien auf Basis von Oxiden des Titans und/oder des Vanadiums bereitgestellt werden, welche über eine ausreichend hohe spezifische Oberfläche (BET) und ein ausreichend großes spezifisches Porenvolumen bei gleichzeitig guter mechanischer Stabilität verfügen. Darüber hinaus sollen die betreffenden porösen Materialien selbsttragend ausgebildet sein, d. h. ohne zusätzliches Trägersystem auskommen. Weiterhin sollen kontrollierbare Partikelmorphologien und/oder kontrollierbare, insbesondere homogene Partikeldurchmesserverteilungen erreichbar sein.

Wie die Anmelderinnen nun überraschend herausgefunden haben, gelingt es in nicht erwarteter Weise, derartige poröse Materialien auf Basis von Oxiden von Titan und/oder Vanadium mit den vorgenannten Eigenschaften mittels Templatverfahren (d. h. Templatsynthese) bereitzustellen, wobei im Rahmen der vorliegenden Erfindung als Templat eine partikuläre Aktivkohle zum Einsatz kommt.

Zur Lösung der zuvor geschilderten Aufgabe schlägt die vorliegende Erfindung somit ein Verfahren zur Herstellung von porösen Materialien auf Basis von Oxiden des Titans und/oder des Vanadiums, insbesondere ein Verfahren zur Herstellung von Partikeln von Oxiden des Titans und/oder des Vanadiums, mittels Templatverfahren (Templatsynthese), gemäß Anspruch 1 vor. Weitere, insbesondere vorteilhafte Ausgestaltungen des erfindungsgemäßen Verfahrens sind Gegenstand der diesbezüglichen Verfahrensunteransprüche.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung von unnötigen Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungsmethoden ermittelt bzw. bestimmt werden können.

Im Übrigen gilt, dass bei allen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Die vorliegende Erfindung betrifft somit ein Verfahren zur Herstellung von porösen Materialien auf Basis von Oxiden des Titans und/oder des Vanadiums, insbesondere ein Verfahren zur Herstellung von Partikeln von Oxiden des Titans und/oder des Vanadiums, mittels Templatverfahren (Templatsynthese),
(a) dass zunächst in einem ersten Verfahrensschritt Titanoxid-Nanopartikel (TiO₂-Nanopartikel) und/oder Vanadiumoxid-Nanopartikel (V₂O₅-Nanopartikel) oder aber Titanoxid/Vanadiumoxid-Nanopartikel (TiO₂/V₂O₅-Nanopartikel) in die Poren eines porösen dreidimensionalen Matrixmaterials ("Exotemplat") eingebracht werden, wobei die Nanopartikel Teilchengrößen im Bereich von 0,1 nm bis 2.000 nm aufweisen und wobei als poröses dreidimensionales Matrixmaterial partikelförmige Aktivkohle eingesetzt wird, wobei das Matrixmaterial an seiner Oberfläche modifiziert ist, wobei die Oberflächenmodifizierung durch oxidative oder reduktive Behandlung des Matrixmaterials erfolgt,
   wobei das Matrixmaterial an seiner Oberfläche hydrophil oder hydrophob ausgerüstet ist,
   wobei die hydrophile Ausrüstung des Matrixmaterials durch oxidative chemische Behandlung des Matrixmaterials mit mindestens einem Oxidationsmittel, ausgewählt aus Salpetersäure, Peroxiden und Persäuren sowie deren Mischungen oder Kombinationen, erfolgt, wobei eine Anbringung hydrophiler Gruppen, ausgewählt aus OH-Gruppen und/oder Oxo-Gruppen, erfolgt, oder
   wobei die hydrophobe Ausrüstung des Matrixmaterials durch reduktive Behandlung des Matrixmaterials in Gegenwart mindestens eines Reduktionsmittels in Form von Wasserstoff erfolgt; und
(b) wobei nachfolgend in einem zweiten Verfahrensschritt das mit den Nanopartikeln beladene Matrixmaterial einer thermischen Behandlung zu Zwecken einer zumindest partiellen, vorzugsweise zu Zwecken einer zumindest im Wesentlichen vollständigen Entfernung des Matrixmaterials unterzogen wird.

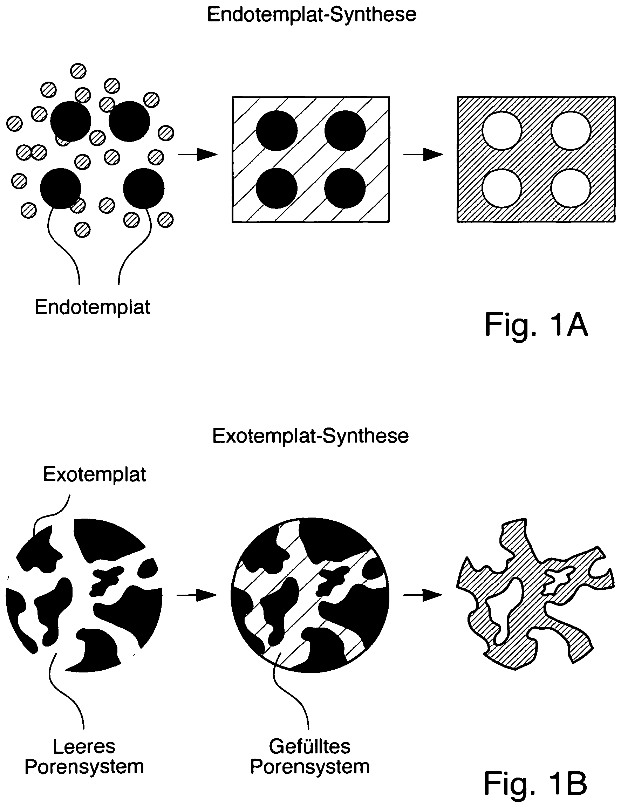

Wie sich aus der Beschreibung des erfindungsgemäßen Verfahrens ergibt, erfolgt die erfindungsgemäße Herstellung der porösen Materialien mittels eines sogenannten Templatverfahrens (Templatsynthese). Bei einer sogenannten Templatsynthese organisiert ein chemisches Templat eine Ansammlung von Atomen, Ionen bzw. Molekülen mit Hinblick auf einen oder mehrere geometrische Orte, um eine bestimmte Vernetzung dieser Atome, Ionen oder Moleküle zu erreichen. Ganz allgemein ausgedrückt, dient das Templat also der Vororientierung der zu verknüpfenden Komponenten. In Abhängigkeit davon, ob die zu verknüpfenden Komponenten in das Templat eingebracht werden oder aber die Template von den zu verknüpfenden Komponenten umgeben werden, unterscheidet man zwischen sogenannten Exotemplaten einerseits und Endotemplaten andererseits. Im Rahmen der Templatsynthese werden im Idealfall die Abmessungen und Geometrie des Templats auf das resultierende Produkt im Sinne eines Negativabdrucks übertragen; in der Praxis ergeben sich jedoch hiervon Abweichungen, worauf nachfolgend noch eingegangen wird. Das Grundprinzip der Templatsynthese ist in der Figurendarstellung gemäß Fig. 1A und 1B veranschaulicht, worauf nachfolgend noch im Detail eingegangen wird.

Im Rahmen des erfindungsgemäßen Verfahrens kommt als poröses dreidimensionales Matrixmaterial (d. h. also als Exotemplat) eine partikuläre, insbesondere kornförmige, vorzugsweise kugelförmige Aktivkohle mit definierter Partikelmorphologie, insbesondere definierter Partikelgröße, zum Einsatz.

Die Verwendung speziell von Aktivkohle als Exotemplat ist mit einer Vielzahl von Vorteilen verbunden: Die erfindungsgemäß als Exotemplat eingesetzte Aktivkohle ist ohne Weiteres nach Verfahren des Standes der Technik herstellbar und auch im großen Maßstab kommerziell erhältlich; handelsübliche Aktivkohle, wie sie erfindungsgemäß als Exotemplat zum Einsatz kommt, wird beispielsweise von der Blücher GmbH, Erkrath, Deutschland, sowie der Adsor-Tech GmbH, Premnitz, Deutschland, vertrieben.

Aktivkohle hat weiterhin den Vorteil, dass im Verfahrensschritt der thermischen Behandlung eine vollständige Entfernung, insbesondere über Verbrennung bzw. Pyrolyse, möglich ist, so dass letztendlich selbsttragende poröse Materialien in partikulärer Form erhalten werden. Des Weiteren besitzt Aktivkohle den Vorteil, dass neben der Teilchengröße auch das innere Porensystem einstellbar bzw. steuerbar ist und somit für die betreffende Anwendung maßgeschneidert werden kann; auf diese Weise kann auch das Porensystem der resultierenden Metalloxide ohne Weiteres eingestellt bzw. gesteuert und somit maßgeschneidert werden, da die als Exotemplat eingesetzte Aktivkohle sozusagen als Schablone für die resultierenden Endprodukte dient. Weiterhin hat die eingesetzte kornförmige, insbesondere kugelförmige Aktivkohle den Vorteil, dass sie mechanisch stark belastbar ist und darüber hinaus die kugelförmige Morphologie auch auf die resultierenden Endprodukte überträgt.

Durch die Synthese bzw. Herstellung der erfindungsgemäßen porösen Materialien in den räumlich begrenzten Poren des Aktivkohle-Exotemplats werden zudem kleine Kristallite der Metalloxide stabilisiert; auf diese Weise werden insbesondere eine Sinterung oder unerwünschte Phasenumwandlungen, die bei einer Kalzinierung nach anderen Syntheserouten (beispielsweise mit Endotemplaten) auftreten können und zum Verlust einer hohen spezifischen Oberfläche führen, in effizienter Weise verhindert. Darüber hinaus können die Abmessungen und Geometrie des Exotemplat-Porensystems auf das resultierende Endprodukt im Sinne eines Negativabdrucks übertragen werden. Da das aktivkohlebasierte Exotemplat darüber hinaus eine definierte Partikelmorphologie, insbesondere eine definierte Teilchengröße, aufweist, bleibt diese auch nach Entfernen des aktivkohlebasierten Exotemplats erhalten.

Im Rahmen der vorliegenden Erfindung werden folglich poröse Materialien auf Basis von Oxiden des Titans und/oder des Vanadiums, insbesondere poröse Partikel von Oxiden von Titan und/oder Vanadium, erhalten, welche über hohe spezifische Oberflächen und große spezifische Porenvolumina verfügen. Darüber hinaus sind die erhaltenden porösen Materialien mechanisch stabil und selbsttragend ausgebildet (d. h. sie kommen ohne zusätzlichen Träger aus), was insbesondere für katalytische Anwendungen von großem Vorteil ist. Weiterhin weisen die nach den erfindungsgemäßen Verfahren erhältlichen porösen Materialien im Allgemeinen einen hohen Kristallinitätsgrad auf, was zum einen zu ihrer mechanischen Stabilität beiträgt und zum anderen ihre katalytische Leistungsfähigkeit signifikant steigert.

Das erfindungsgemäße Verfahren ermöglicht somit die Herstellung von selbsttragenden porösen Materialien auf Basis von Oxiden des Titans und/oder des Vanadiums in partikulärer Form, welche insbesondere für katalytische Anwendungen, aber auch für andere Anwendungen (z. B. Gassensorik, Brennstoffzellentechnologie, Abgasbehandlung etc.) geeignet sind.

Der Begriff "poröse Materialien auf Basis von Oxiden des Titans und/oder des Vanadiums" ist umfassend zu verstehen und bezeichnet also insbesondere poröse Materialien auf Basis von Titanoxid (TiO₂) oder aber poröse Materialien auf Basis von Vanadiumoxid (V₂O₅) oder aber poröse Materialien auf Basis von Titan/Vanadium-Mischoxiden oder aber poröse Materialien auf Basis von Mischungen von Titanoxid und Vanadiumoxid. Der Begriff der Mischoxide, wie er im Rahmen der vorliegenden Erfindung verwendet wird, ist sehr weit zu verstehen und umfasst insbesondere sowohl reine Mischungen der Metalloxide als auch echte Mischoxide im eigentlichen Sinne, bei denen die verschiedenen Metalle bzw. Metallionen in einer einheitlichen Struktur, insbesondere einem gemeinsamen Gitter, vorliegen.

Im Rahmen der vorliegenden Erfindung hat es sich als besonders vorteilhaft erwiesen, wenn die Nanopartikel in Form einer Dispersion oder einer kolloidalen Lösung, insbesondere in Form eines Sols, eingesetzt werden. Mit anderen Worten werden im Rahmen der vorliegenden Erfindung die Nanopartikel in Form einer Dispersion oder einer kolloidalen Lösung, insbesondere in Form eines Sols, in die Poren des Matrixmaterials (d. h. Aktivkohle) eingebracht. Dabei kann die eingesetzte Dispersion oder kolloidale Lösung der Nanopartikel grundsätzlich wässrig basiert oder aber organisch basiert, vorzugsweise wässrig basiert, ausgebildet sein.

Diese Ausführungsform der vorliegenden Erfindung ist mit einer Vielzahl von Vorteilen verbunden: Zum einen können auf diese Weise höhere Konzentrationen an Metalloxiden im Exotemplat erhalten werden - im Vergleich zu der Einbringung von Präkursorsalzen der Metalle mit nachfolgender Oxidation. Dies führt zu mechanisch stabileren Endprodukten mit einem höheren Kristallitätsgrad und größeren spezifischen Oberflächen und Porenvolumina. Zum anderen führt dies zu einer verbesserten Stabilisierung der Kristallite im Inneren des Exotemplats, da die Nanopartikel Kristallisationskeime bilden, welche unerwünschte Phasenumwandlungen in effizienter Weise verhindern. Das räumlich begrenzte Porensystem des Aktivkohle-Exotemplats führt außerdem zu einer weitergehenden Stabilisierung der Metalloxidkristallite und verhindert zudem ein unerwünschtes Sintern sowie unerwünschte Phasenumwandlungen.

In erfindungsgemäß besonders bevorzugter Weise wird im Rahmen der vorliegenden Erfindung ein Sol, d. h. eine kolloidale Lösung, der betreffenden Nanopartikel (d. h. TiO₂-Nanopartikel und/oder V₂O₅-Nanopartikel oder aber TiO₂/V₂O₅-Nanopartikel) hergestellt bzw. eingesetzt und in das Porensystem des Exotemplats eingebracht.

Im Allgemeinen werden die Nanopartikel, insbesondere die Dispersionen oder kolloidalen Lösungen, vorzugsweise Sole, der betreffenden Nanopartikel, mittels Fällung (Präzipitation) erhalten, wobei im Allgemeinen insbesondere von Lösungen oder Dispersionen von Salzen oder anderen Verbindungen (z. B. Alkoxiden) der betreffenden Metalle mit nachfolgender Oxidation ausgegangen werden kann. Dies ist dem Fachmann als solches geläufig und bekannt. Üblicherweise erfolgt die Herstellung der Nanopartikel, insbesondere der Dispersionen und kolloidalen Lösungen der Nanopartikel, *in situ.*

Im Allgemeinen schließt sich dem Verfahrensschritt der Einbringung der die Nanopartikel enthaltenden Dispersion oder kolloidalen Lösung, insbesondere des Sols, in die Poren des Matrixmaterials (Exotemplats) - noch vor Durchführung der thermischen Behandlung gemäß Verfahrensschritt (b) - zunächst ein Verfahrensschritt der Trocknung an. Dieser Trocknungsschritt dient insbesondere der Entfernung des flüssigen Mediums der die Nanopartikel enthaltenden Dispersion oder kolloidalen Lösung, insbesondere des Sols.

Um eine Einbringung der Nanopartikel in das Porensystem des Exotemplats zu ermöglichen, sind die Teilchengrößen der Nanopartikel kleiner als die Durchmesser der Poren des Matrixmaterials ausgebildet. Besonders bevorzugt ist es, wenn das Verhältnis der Durchmesser der Poren des Matrixmaterials zu den Teilchengrößen der Nanopartikel > 1 : 1 (z. B. mindestens 1,05 : 1), insbesondere mindestens 1,25 : 1, vorzugsweise mindestens 1,5 : 1, bevorzugt mindestens 1,75 : 1, besonders bevorzugt mindestens 2, ganz besonders bevorzugt mindestens 5, noch mehr bevorzugt mindestens 10, noch weiter bevorzugt mindestens 20, noch weiter bevorzugt mindestens 50, beträgt. Erfindungsgemäß bevorzugt ist es, wenn mindestens 50 %, insbesondere mindestens 70 %, vorzugsweise mindestens 90 %, besonders bevorzugt mindestens 99 % und mehr, ganz besonders bevorzugt 100 %, der eingesetzten Nanopartikel diese Voraussetzung erfüllt; sofern ein wie zuvor spezifizierter Anteil der Nanopartikel diese Voraussetzung nicht erfüllt, ist dies dennoch nicht abträglich, da dieser Teil der Nanopartikel dann an das Matrixmaterial anlagern und nach thermischer Behandlung des Matrixmaterials in Verfahrensschritt (b) eine äußere Hüllschicht im Endprodukt ausbilden kann (was zu einer zusätzlichen Stabilisierung der Endprodukte führt).

Erfindungsgemäß weisen die einzubringenden Nanopartikel der betreffenden Metalloxide Teilchengrößen im Bereich von 0,1 nm bis 2.000 nm, insbesondere 0,5 nm bis 1.000 nm, vorzugsweise 0,75 nm bis 750 nm, besonders bevorzugt 1 nm bis 500 nm, ganz besonders bevorzugt 1 nm bis 250 nm, noch mehr bevorzugt 2 bis 100 nm, auf. Insbesondere weisen die betreffenden Nanopartikel mittlere Teilchengrößen (D50) im Bereich von 0,1 nm bis 500 nm, insbesondere 0,2 nm bis 100 nm, vorzugsweise 0,5 nm bis 50 nm, besonders bevorzugt 1 nm bis 25 nm, auf.

Gemäß einer besonderen Ausführungsform der vorliegenden Erfindung erfolgt das Einbringen der Nanopartikel in die Poren des Matrixmaterials in Gegenwart von und/oder zusammen mit mindestens einem Endotemplat, insbesondere einem strukturdirigierenden und/oder porogenen (porenbildenden) Agens.

Das Endotemplat sollte bei dieser Ausführungsform derart ausgewählt sein, dass es bei der thermischen Behandlung gemäß Verfahrensschritt (b) zumindest partiell, vorzugsweise zumindest im Wesentlichen vollständig, entfernt werden kann.

Diese Ausführungsform hat den Vorteil, dass - neben dem Porensystem, welches als Negativabdruck des Exotemplats auf das Endprodukt übertragen wird - ein zusätzliches, sozusagen intrinsisches zweites Porensystem mit einer vom ersten Porensystem verschiedenen Durchmesserverteilung erzeugt wird, wobei im Allgemeinen das durch das Endotemplat erzeugte Porensystem einen kleineren Porendurchmesser als das durch das Exotemplat vorgegebene Porensystem aufweist. Bei dieser Ausführungsform resultiert also ein sogenanntes hierarchisch strukturiertes Porensystem, d. h. ein Porensystem mit bimodaler oder multimodaler Porengrößenverteilung. Zudem werden auf diese Weise die spezifischen Oberflächen (BET) und spezifischen Porenvolumina vergrößert, so dass insbesondere für katalytische, aber auch für andere Anwendungen die Leistungseigenschaften der erfindungsgemäßen porösen Materialien weiter gesteigert werden können.

Was das eingesetzte Endotemplat bei dieser besonderen Ausführungsform anbelangt, so kann dieses ausgewählt sein aus der Gruppe von organischen Polymeren und Copolymeren, insbesondere Blockcopolymeren (z. B. Blockcopolymere aus Ethylenoxid und Propylenoxid = Poloxamere, z. B. Pluronic® von der BASF, Ludwigshafen, Deutschland), organischen Tensiden, mizellenbildenden Verbindungen und Ammoniumsalzen, insbesondere quarternären oder diquarternären Ammoniumsalzen, sowie deren Mischungen und Kombinationen. Die vorgenannten Verbindungen lassen sich im Rahmen der thermischen Behandlung gemäß Verfahrensschritt (b) ohne Weiteres, insbesondere rückstandsfrei, entfernen, so dass ein zusätzliches inneres Porensystem generiert wird.

Bei der besonderen Ausführungsform der vorliegenden Erfindung, welche ein Endotemplat verwendet, kann insbesondere derart vorgegangen werden, dass das Endotemplat Bestandteil einer die Nanopartikel enthaltenden Dispersion oder kolloidalen Lösung, insbesondere eines Sols, ist. Mit anderen Worten kann das Endotemplat in eine die Nanopartikel enthaltenden Dispersion oder kolloidalen Lösung, insbesondere ein Sol, inkorporiert werden (z. B. durch Lösen oder Dispergieren des Endotemplats, insbesondere auf Basis von Blockcopolymeren, in der betreffenden Dispersion oder Lösung der Nanopartikel).

Damit bei dieser besonderen Ausführungsform der vorliegenden Erfindung ein wirksames zusätzliches Porensystem generiert werden kann, sollte das Endotemplat in einem molaren Verhältnis n_{Endotemplat}/n_{Metalle}, berechnet als Molverhältnis von eingesetztem Endotemplat zu eingesetzten Metallen der Metalloxide, im Bereich von 0,005 bis 0,2, insbesondere 0,01 bis 0,1, vorzugsweise 0,015 bis 0,08, eingesetzt werden.

Im Rahmen dieser besonderen Ausführungsform der vorliegenden Erfindung, welche zusätzlich zu dem Exotemplat auf Aktivkohlebasis auch noch ein Endotemplat verwendet, wird das erfindungsgemäße Verfahren also als kombinierte Exo- und Endotemplatsynthese durchgeführt. Wie zuvor ausgeführt, resultiert in den erhaltenen porösen Materialien ein hierarchisch strukturiertes Porensystem mit bimodaler bzw. multimodaler Verteilung der Porendurchmesser. Durch die Art und Menge bzw. den Anteil an Endotemplat kann das Porensystem dann gezielt eingestellt bzw. gesteuert, insbesondere maßgeschneidert, werden.

Was die erfindungsgemäß als Exotemplat eingesetzte Aktivkohle anbelangt, so kommt - wie zuvor beschrieben - zu diesem Zweck eine kornförmige, insbesondere kugelförmige Aktivkohle zum Einsatz, wie sie kommerziell verfügbar ist (z. B. insbesondere von der Blücher GmbH, Erkrath, Deutschland, oder von der Adsor-Tech GmbH, Premnitz, Deutschland).

Die eingesetzte Aktivkohle, insbesondere in Form von Kornkohle oder Kugelkohle, ist nach bekannten Verfahren des Standes der Technik erhältlich: Üblicherweise werden zu diesem Zweck korn- bzw. kugelförmige sulfonierte organische Polymere, insbesondere auf Basis von divinylbenzolvernetztem Polystyrol, karbonisiert und anschließend zu der betreffenden Aktivkohle aktiviert. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. die parallele, zu derselben Patentfamilie gehörende US 7,737,038 B2 verwiesen werden. Dies ist dem Fachmann als solches bekannt.

Die nachfolgend aufgeführten Parameterangaben bezüglich der als Exotemplat eingesetzten Aktivkohle und der resultierenden porösen Materialien werden mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität, der Porengrößenverteilung und von anderen Adsorptionseigenschaften ergeben sich im Allgemeinen jeweils aus der betreffenden Stickstoffsorptionsisotherme der betreffenden Aktivkohle bzw. der vermessenen Produkte.

Insbesondere wird im Rahmen der vorliegenden Erfindung als Exotemplat ein Matrixmaterial, d. h. eine Aktivkohle, eingesetzt, welche Partikelgrößen, insbesondere Teilchendurchmesser, im Bereich von 0,001 bis 2 mm, insbesondere 0,01 bis 1 mm, bevorzugt 0,05 bis 0,8 mm, vorzugsweise 0,1 bis 0,7 mm, besonders bevorzugt 0,15 bis 0,6 mm, aufweist; dabei sollten vorteilhafterweise, bezogen auf eingesetztes Matrixmaterial bzw. Aktivkohle, mindestens 80 Gew.-%, insbesondere mindestens 90 Gew.-%, vorzugsweise mindestens 95 Gew.-%, des eingesetzten Matrixmaterials Partikelgrößen, insbesondere Teilchendurchmesser, in den vorgenannten Bereichen aufweisen. Gemäß einer besonderen Ausführungsform weist das als Exotemplat eingesetzte Matrixmaterial, d. h. die Aktivkohle, mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, auf.

Um eine gute Beladung mit Nanopartikeln einerseits und eine hohe Porosität des Endprodukts andererseits zu gewährleisten, sollte das als Exotemplat eingesetzte Matrixmaterial, d. h. die Aktivkohle, ein großes Gesamtporenvolumen aufweisen.

Insbesondere sollte das Matrixmaterial, d. h. die Aktivkohle, ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweisen. Besonders vorteilhaft ist es, wenn 50 % bis 99 %, insbesondere 60 % bis 99 %, vorzugsweise 70 % bis 95 %, des Gesamtporenvolumens, insbesondere des Gesamtporenvolumens nach Gurvich, des Matrixmaterials, d. h. der Aktivkohle, durch Poren mit Porendurchmessern von < 500 nm, insbesondere < 250 nm, vorzugsweise < 100 nm, gebildet sind.

Im Rahmen der vorliegenden Erfindung bezeichnet der Begriff der Mikroporen solche Poren mit Porendurchmessern bis zu 20 Å (d. h. 2 nm) einschließlich, wohingegen der Begriff der Mesoporen solche Poren mit Porendurchmessern von > 20 Å bis 500 Å einschließlich (d. h. > 2 nm bis 50 nm einschließlich) bezeichnet und der Begriff der Makroporen solche Poren mit Porendurchmessern > 500 Å (d. h. > 50 nm) bezeichnet.

Was die Bestimmung des Gesamtporenvolumens nach Gurvich anbelangt, so handelt es sich um eine dem Fachmann auf diesem Gebiet an sich bekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Im Rahmen des erfindungsgemäßen Verfahrens hat es sich als besonders vorteilhaft erwiesen, wenn das Matrixmaterial, d. h. die Aktivkohle, ein durch Poren mit Porendurchmesser ≤ 20 Å gebildetes Porenvolumen, insbesondere Mikroporenvolumen nach Carbon Black, im Bereich von 0,1 bis 2 cm³/g, insbesondere 0,2 bis 1,5 cm³/g, vorzugsweise 0,3 bis 1,1 cm³/g, besonders bevorzugt 0,4 bis 1 cm³/g, aufweist. Insbesondere sollten 20 % bis 95 %, insbesondere 30 % bis 95 %, vorzugsweise 40 % bis 90 % des Gesamtporenvolumens des Matrixmaterials, d. h. der Aktivkohle, durch Poren mit Porendurchmessern von ≤ 20 Å (d. h. Mikroporen) gebildet sein.

Die Bestimmungsmethode nach Carbon Black ist dem Fachmann an sich bekannt, so dass es diesbezüglich keiner weitergehender Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Ebenfalls vorteilhaft ist es, wenn das als Exotemplat eingesetzte Matrixmaterial, d. h. die Aktivkohle, einen mittleren Porendurchmesser im Bereich von 1 bis 150 Å, insbesondere 1 bis 100 Å, bevorzugt 1,5 bis 75 Å, besonders bevorzugt 1,5 bis 50 Å, aufweist. Auf diese Weise wird ein entsprechendes Porensystem auch im Endprodukt erhalten. Die Bestimmung des mittleren Porendurchmessers erfolgt auf Basis der jeweiligen Stickstoffsorptionsisothermen.

Um in den Endprodukten hohe spezifische Oberflächen (BET) zu erhalten, sollte das als Exotemplat eingesetzte Matrixmaterial, d. h. die Aktivkohle, eine ausreichend große BET-Oberfläche besitzen. Insbesondere sollte das als Exotemplat eingesetzte Matrixmaterial, d. h. die Aktivkohle, eine spezifische BET-Oberfläche im Bereich von 500 m²/g bis 3.500 m²/g, insbesondere 600 bis 2.500 m²/g, vorzugsweise 700 bis 2.000 m²/g, besonders bevorzugt 800 bis 1.800 m²/g, aufweisen.

Die Bestimmung der spezifischen Oberfläche gemäß BET ist dem Fachmann grundsätzlich als solches bekannt, so dass diesbezüglich keine weitergehenden Einzelheiten ausgeführt werden zu brauchen. Alle BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die sogenannte MultiPoint-BET-Bestimmungsmethode (MP-BET) in einem Partialdruckbereich p/p₀ von 0,05 bis 0,1 angewendet.

In Bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Des Weiteren ist es von Vorteil, wenn das als Exotemplat eingesetzte Matrixmaterial, d. h. die Aktivkohle, eine ausreichende mechanische Belastbarkeit aufweist. Insbesondere weist das als Exotemplat eingesetzte Matrixmaterial, d. h. die Aktivkohle, eine Druck- und/oder Berstfestigkeit (Gewichtsbelastbarkeit) pro Aktivkohlekorn, insbesondere pro Aktivkohlekügelchen, von mindestens 10 Newton, insbesondere mindestens 15 Newton, vorzugsweise mindestens 20 Newton, auf. Insbesondere weist das als Exotemplat eingesetzte Matrixmaterial, d. h. die Aktivkohle, eine Druck- und/oder Berstfestigkeit (Gewichtsbelastbarkeit) pro Aktivkohlekorn, insbesondere pro Aktivkohlekügelchen, im Bereich von 10 bis 50 Newton, insbesondere 12 bis 45 Newton, vorzugsweise 15 bis 40 Newton, auf.

Erfindungsgemäß ist das als Exotemplat eingesetzte Matrixmaterial, d. h. die Aktivkohle, an seiner Oberfläche modifiziert. Mit anderen Worten ist erfindungsgemäß das als Exotemplat eingesetzte Matrixmaterial, d. h. die Aktivkohle, einer Oberflächenbehandlung und/oder Oberflächenmodifizierung unterzogen worden. Zu diesem Zweck kann das als Exotemplat eingesetzte Matrixmaterial bzw. die Aktivkohle beispielsweise an der Oberfläche mit polaren Gruppen ausgerüstet bzw. modifiziert sein. Erfindungsgemäß ist das als Exotemplat eingesetzte Matrixmaterial bzw. die Aktivkohle an seiner bzw. ihrer Oberfläche hydrophil oder hydrophob ausgerüstet, insbesondere mit hydrophilen oder hydrophoben Gruppen modifiziert.

Bei der vorliegenden Erfindung, welche eine Oberflächenmodifizierung bzw. Oberflächenbehandlung des Exotemplats bzw. der Aktivkohle vorsieht, erfolgt die Oberflächenmodifizierung bzw. Oberflächenbehandlung des Exotemplats in Anpassung an die einzubringenden Nanopartikel bzw. deren Dispersionen oder Lösungen: Sofern eine wässrige Dispersion oder Lösung, insbesondere ein wässriges Sol, der Nanopartikel eingesetzt wird, empfiehlt sich bei dieser besonderen Ausführungsform eine polare oder hydrophile Ausrüstung der Oberfläche des Exotemplats, während bei der Verwendung von organisch basierten Dispersionen oder Lösungen der Nanopartikel eine hydrophobe Oberflächenmodifizierung vorgesehen sein sollte. Dies im Einzelfall abzustimmen oder einzustellen, liegt im Ermessen des Fachmanns.

Was die Oberflächenmodifizierung des Exotemplats anbelangt, so erfolgt die Oberflächenmodifizierung durch oxidative oder reduktive Behandlung des Matrixmaterials bzw. der Aktivkohle, wobei die oxidative oder reduktive Behandlung des Matrixmaterials grundsätzlich chemisch erfolgt.

Erfindungsgemäß erfolgt die polare und/oder hydrophile Ausrüstung der Oberfläche des Matrixmaterials bzw. der Aktivkohle durch oxidative chemische Behandlung und/oder Reaktion des Matrixmaterials bzw. der Aktivkohle mit mindestens einem chemischen Oxidationsmittel (wobei das Oxidationsmittel ausgewählt ist aus der Gruppe von Salpetersäure, Peroxiden und Persäuren sowie deren Mischungen oder Kombinationen).

Erfindungsgemäß erfolgt die unpolare und/oder hydrophobe Ausrüstung der Oberfläche des Matrixmaterials bzw. der Aktivkohle durch reduktive Behandlung in Gegenwart mindestens eines Reduktionsmittels (nämlich Wasserstoff).

Durch eine gezielte Modifikation der Oberflächeneigenschaften des Exotemplats, insbesondere durch eine Kontrolle der Hydrophilie oder Hydrophobie, lässt sich eine Beladung mit verschiedenen Lösungen oder Dispersionen der Metalloxidnanopartikel besonders effizient gestalten. Sowohl die Geschwindigkeit als auch die Menge der Beladung mit den Nanopartikeln kann gegenüber nichtmodifizierten Exotemplaten deutlich gesteigert werden.

Wie zuvor beschrieben, schließt sich dem Verfahrensschritt (a) der Beladung mit Nanopartikeln ein nachfolgender zweiter Verfahrensschritt (b) der thermischen Behandlung zu Zwecken einer zumindest partiellen, vorzugsweise zu Zwecken einer zumindest im Wesentlichen vollständigen Entfernung des Matrixmaterials bzw. Endotemplats an.

Üblicherweise wird die thermische Behandlung gemäß dem zweiten Verfahrensschritt (b) unter oxidativen Bedingungen, insbesondere in Gegenwart von Sauerstoff bzw. einer sauerstoffhaltigen Atmosphäre, durchgeführt.

Üblicherweise wird die thermische Behandlung gemäß dem zweiten Verfahrensschritt (b) derart durchgeführt, dass sie zu einer zumindest partiellen, vorzugsweise zu einer zumindest im Wesentlichen vollständigen Entfernung des Matrixmaterials bzw. Exotemplats mittels Abbrand oder Pyrolyse führt.

Im Rahmen der thermischen Behandlung gemäß dem zweiten Verfahrensschritt (b) erfolgt im Allgemeinen einerseits eine Kalzinierung der Metalloxide und/oder andererseits ein zumindest partieller, vorzugsweise ein zumindest im Wesentlichen vollständiger Abbrand oder Pyrolyse des Matrixmaterials.

Im Allgemeinen wird die thermische Behandlung gemäß dem zweiten Verfahrensschritt (b) bei Temperaturen im Bereich von 300 bis 1.500 °C, insbesondere 400 bis 1.200 °C, vorzugsweise 500 bis 1.000 °C, besonders bevorzugt 550 bis 800 °C durchgeführt. Üblicherweise erfolgt die thermische Behandlung für eine Dauer von 1 bis 20 Stunden, insbesondere 2 bis 15 Stunden, vorzugsweise 3 bis 10 Stunden. Wie zuvor ausgeführt, wird die thermische Behandlung üblicherweise in Gegenwart einer sauerstoffhaltigen Atmosphäre bzw. in Gegenwart von Sauerstoff durchgeführt.

Je nach eingesetzten Edukt-Nanopartikeln resultieren bei dem erfindungsgemäßen Verfahren also partikuläre poröse Materialien auf Basis von Titanoxid (TiO₂) oder aber partikuläre poröse Materialien auf Basis von Vanadiumoxid (V₂O₅) oder aber partikuläre poröse Materialien auf Basis von Titan/Vanadium-Mischoxiden oder aber partikuläre poröse Materialien auf Basis von Mischungen von Titanoxid und Vanadiumoxid.

Weiterhin ist es erfindungsgemäß nicht ausgeschlossen, dass den porösen Materialien nach der vorliegenden Erfindung auch noch andere Inhaltsstoffe bzw. Komponenten zugesetzt werden, insbesondere durch nachträgliche oder anfängliche Dotierung, nachträgliche Imprägnierung oder dergleichen. So können gemäß einer besonderen Ausführungsform den porösen Materialien nach der vorliegenden Erfindung beispielsweise katalytisch aktive Metalle (wie z. B. Cu, Ag, Pt, Au, Pd, Rh, Ir, Ru, Co, Ni etc.) oder aber auch andere Metalloxide (z. B. Aluminiumoxid, Bismutoxid, Eisenoxid, Kupferoxid, Lanthanoidoxid, insbesondere Ceroxid, Manganoxid, Molybdänoxid, Siliziumoxid, Wolframoxid, Zirkoniumoxid etc.) zugesetzt werden.

Was die resultierenden Partikel der als Endprodukt erhaltenen porösen Materialien anbelangt, so weisen diese im Allgemeinen geringere Partikelgrößen als die Exotemplate auf; dieses Phänomen lässt sich - ohne sich auf eine bestimmte Theorie festlegen zu wollen - auf eine Verdichtung der Phasen der Metalloxide, insbesondere aufgrund von Kristillisation, zurückzuführen, welche bei der Entfernung der Aktivkohle durch Pyrolyse eintritt. Das vorgenannte Phänomen kann sich also durch Verdichtung und Phasenumwandlung erklären lassen.

Im Allgemeinen liegt das Größenverhältnis der Partikel des eingesetzten Matrixmaterials zu den Partikeln der erhaltenen porösen Materialien im Bereich zwischen 1,1:1 bis 50 : 1, insbesondere 1,2 : 1 bis 20 : 1, vorzugsweise 1,4 : 1 bis 10 : 1, besonders bevorzugt 1,5 : 1 bis 5 : 1.

Wie zuvor ausgeführt, führt also das erfindungsgemäße Verfahren zu partikulären, insbesondere selbsttragenden porösen Materialien auf Basis von Oxiden des Titans und/oder des Vanadiums, welche gegenüber den entsprechenden Materialien des Standes der Technik signifikant verbesserte Eigenschaften aufweisen, insbesondere im Hinblick auf die spezifischen Oberflächen (BET), die spezifischen Porenvolumina, die mechanische Stabilität, die Partikelmorphologie und die Porensysteme bzw. Porenanordnung bzw. Porengrößenverteilung.

Weiterhin sind vorliegend poröse Materialien auf Basis von Oxiden des Titans und/oder des Vanadiums, insbesondere in Form von diskreten Partikeln, wie sie gemäß einem wie zuvor beschriebenen Verfahren nach der vorliegenden Erfindung erhältlich sind, beschrieben.

Vorliegend sind also poröse Materialien auf Basis von Oxiden des Titans und/oder des Vanadiums beschrieben, wobei die porösen Materialien in Form von Partikeln vorliegen.

Wie zuvor bereits im Zusammenhang mit dem erfindungsgemäßen Verfahren geschildert, ist ein besonderer Vorteil der vorliegenden Erfindung darin zu sehen, dass die porösen Materialien selbsttragend ausgebildet sind bzw. dass die porösen Materialien ohne Trägermaterial ausgebildet sind.

Weiterhin von Vorteil ist, dass die vorliegend beschriebenen porösen Materialien kornförmig, insbesondere kugelförmig, ausgebildet sind bzw. dass die porösen Materialien in Form von kornförmigen, insbesondere kugelförmigen, diskreten bzw. einzelnen Partikeln ausgebildet sind.

Die Form bzw. Partikelmorphologie des Exotemplats überträgt sich somit wie ein Negativabdruck auch auf die resultierenden Produkte, d. h. die vorliegend beschriebenen porösen Materialien.

Wie zuvor aber im Zusammenhang mit dem erfindungsgemäßen Verfahren bereits geschildert, weisen die Partikel der vorliegend beschriebenen porösen Materialien - im Vergleich zum eingesetzten Exotemplat - aber aufgrund von Verdichtungs- und Kristallisationserscheinungen verringerte Partikelgrößen bzw. verringerte Partikeldurchmesser auf.

Insbesondere weisen die vorliegend beschriebenen porösen Materialien Partikelgrößen, insbesondere Teilchendurchmesser, im Bereich von 0,001 bis 1 mm, insbesondere 0,01 bis 0,8 mm, bevorzugt 0,05 bis 0,6 mm, vorzugsweise 0,1 bis 0,5 mm, auf. Bevorzugt weisen dabei insbesondere mindestens 80 Gew.-%, insbesondere mindestens 90 Gew.-%, vorzugsweise mindestens 95 Gew.-%, der Partikel der porösen Materialien Partikelgrößen, insbesondere Teilchendurchmesser, in den vorgenannten Bereichen auf.

Üblicherweise weisen die porösen Materialien mittlere Partikelgrößen (D50), insbesondere mittlere Teilchendurchmesser (D50), im Bereich von 0,01 bis 0,8 mm, insbesondere 0,05 bis 0,7 mm, bevorzugt 0,1 bis 0,6 mm, auf.

Infolge des eingesetzten Exotemplats verfügen die porösen Materialien über ein großes Porenvolumen. Im Allgemeinen weisen die porösen Materialien ein Gesamtporenvolumen, insbesondere ein Gesamtporenvolumen nach BJH (V_{BJH}), im Bereich von 0,01 bis 2 cm³/g, insbesondere 0,05 bis 1,5 cm³/g, vorzugsweise 0,05 bis 1 cm³/g, besonders bevorzugt 0,1 bis 0,8 cm³/g, auf. Insbesondere werden 50 % bis 99 %, insbesondere 60 % bis 99 %, vorzugsweise 70 % bis 95 %, des Gesamtporenvolumens, insbesondere des Gesamtporenvolumens nach BJH (V_{BJH}), der porösen Materialien durch Poren mit Porendurchmessern von < 40 Å, insbesondere < 30 Å, gebildet.

Weiterhin weisen die vorliegend beschriebenen porösen Materialien einen mittleren Porendurchmesser, insbesondere bestimmt nach der BJH-Methode, im Bereich von 1 bis 35 Å, insbesondere 1 bis 30 Å, bevorzugt 1,5 bis 30 Å, besonders bevorzugt 2 bis 25 Å, auf.

Die Durchführung der Porenanalyse, insbesondere der Mesoporenanalyse, nach der BJH-Methode ist dem Fachmann als solches bekannt, so dass es diesbezüglich keiner weitergehender Einzelheiten bedarf. Die Standard-(Meso-)Porenanalyse nach der BJH-Methode beinhaltet neben der BJH-Porengrößenverteilung (DIN 66134) und dem Porenvolumen auch die Mehrpunkt-BET-Oberfläche (DIN ISO 9277).

Insbesondere für mesoporöse Substanzen mit Porengrößen von 2 bis 50 nm lassen sich Porenradienverteilung und mittlere Porendurchmesser aus der aufgenommenen Stickstoffsorptionsisothermen berechnen. Das Verfahren nach BJH (Barrett, Joyner und Halenda) beruht auf dem Effekt der Kapillarkondensation und dabei auf der Bestimmung des Volumens des flüssigen Kondensats in Poren in Abhängigkeit vom Relativdruck des gasförmigen Sorptivs (Stickstoff) über der Feststoffprobe bei konstanter Temperatur. Zur Ermittlung der BJH-Porengrößenverteilung wird die Stickstoff-Desorptionsisotherme bei der Siedetemperatur des Stickstoffs, etwa 77 K, gemessen. Der Berechnung wird ein zylindrisches Porenmodell zugrundegelegt, wobei für zylindrische Poren die Porenweite gleich dem Porendurchmesser ist. Bei einem vorgegebenen Sorptivdruck sind alle Poren gefüllt bis zu einem maximalen Radius, der für zylindrische Poren durch die Kelvingleichung gegeben ist.

Weiterhin verfügen die vorliegend beschriebenen porösen Materialien über hohe spezifische Oberflächen. Insbesondere weisen die porösen Materialien eine spezifische BET-Oberfläche im Bereich von 10 m²/g bis 1.000 m²/g, insbesondere 15 bis 900 m²/g, vorzugsweise 20 bis 500 m²/g, besonders bevorzugt 25 bis 300 m²/g, auf.

Wie zuvor beschrieben, kann gemäß einer besonderen Ausführungsform des erfindungsgemäßen Herstellungsverfahrens zusätzlich zu dem Exotemplat ein sogenanntes Endotemplat eingesetzt werden. Gemäß dieser besonderen Ausführungsform weisen die porösen Materialien ein hierarchisch strukturiertes bzw. ein hierarchisch aufgebautes Porensystem auf. Insbesondere weisen die vorliegend beschriebenen porösen Materialien gemäß dieser Ausführungsform eine bimodale oder multimodale Porendurchmesserverteilung auf; dabei können die porösen Materialien mindestens ein erstes und zweites Porensystem aufweisen, deren Verteilungsmaxima der Porendurchmesser um mindestens 5 nm, insbesondere um mindestens 10 nm, differieren (insbesondere bezogen auf das Diagramm "Differentielles Porenvolumen (dV/dD)/Porendurchmesser (D)").

Weiterhin zeichnen sich die vorliegend beschriebenen porösen Materialien durch eine hohe mechanische Belastbarkeit aus. Insbesondere weisen die porösen Materialien eine Druck- und/oder Berstfestigkeit (Gewichtsbelastbarkeit) pro Korn, insbesondere pro Kügelchen, der porösen Materialien von mindestens 1 Newton, insbesondere mindestens 2 Newton, vorzugsweise mindestens 5 Newton, auf. Üblicherweise weisen die porösen Materialien eine Druck- und/oder Berstfestigkeit (Gewichtsbelastbarkeit) pro Korn, insbesondere pro Kügelchen, der porösen Materialien im Bereich von 1 bis 30 Newton, insbesondere 2 bis 25 Newton, vorzugsweise 5 bis 20 Newton, auf.

Eine weitere Besonderheit der vorliegenden Erfindung ist darin zu sehen, dass die vorliegend beschriebenen porösen Materialien zumindest teilkristallin, insbesondere zumindest im Wesentlichen vollständig kristallin, ausgebildet sind. Bevorzugterweise weisen die porösen Materialien einen Kristallinitätsgrad von mindestens 25 %, insbesondere mindestens 30 %, vorzugsweise mindestens 40 %, besonders bevorzugt mindestens 50 %, ganz besonders bevorzugt mindestens 60 % und mehr, auf. Dies führt zu besonders vorteilhaften Eigenschaften in katalytischen, aber auch in anderen Anwendungen der vorliegend beschriebenen porösen Materialien.

Was die vorliegend beschriebenen porösen Materialien anbelangt, so können diese poröse Materialien entweder auf Basis von Titanoxid (TiO₂) oder aber auf Basis von Vanadiumoxid (V₂O₅) oder aber auf Basis von Titan/Vanadium-Mischoxiden oder aber auf Basis von Mischungen von Titanoxid und Vanadiumoxid, insbesondere jeweils in partikulärer Form und/oder in Form diskreter Partikel, ausgebildet sein.

Weiterhin kann es vorgesehen sein, dass die vorliegend beschriebenen porösen Materialien mindestens einen weiteren Inhaltsstoff und/oder mindestens eine zusätzliche Komponente umfassen bzw. enthalten. Der weitere Inhaltsstoff bzw. die zusätzliche Komponente kann insbesondere ausgewählt sein aus katalytisch aktiven Metallen, vorzugsweise Cu, Ag, Pt, Au, Pd, Rh, Ir, Ru, Co und/oder Ni, und/oder aus Metalloxiden, vorzugsweise Aluminiumoxid, Bismutoxid, Eisenoxid, Kupferoxid, Lanthanoidoxid, insbesondere Ceroxid, Manganoxid, Molybdänoxid, Siliziumoxid, Wolframoxid und/oder Zirkoniumoxid.

Für den Fall, dass die poröse Materialien auf Basis von Titan/Vanadium-Mischoxid oder auf Basis einer Mischung von Titanoxid und Vanadiumoxid ausgebildet sind, kann das Masseverhältnis von Titan zu Vanadium in weiten Bereichen variieren. Insbesondere kann bei dieser Ausführungsform das Masseverhältnis von Titan zu Vanadium, jeweils berechnet als Metall, im Bereich von 1 : 99 bis 99 : 1, insbesondere 5 : 95 bis 95 : 5, vorzugsweise 10 : 90 bis 90 : 10, variieren.

Die vorliegend beschriebenen porösen Materialien ermöglichen ein breites Anwendungsspektrum.

Vorliegend sind somit die Verwendungen der nach dem erfindungsgemäßen Verfahren erhältlichen porösen Materialien beschrieben.

Insbesondere können die vorliegend beschriebenen porösen Materialien als Katalysatoren, Katalysatorbestandteile oder Katalysatorträger (Katalysatorträgermaterialien) eingesetzt werden. Aufgrund ihrer hohen thermischen und mechanischen Stabilität sind die porösen Materialien für diese Anwendungen, insbesondere auch unter hohen Temperaturen, besonders geeignet. Für katalytische Anwendungen sind zudem die hohe spezifische Oberfläche und das große spezifische Porenvolumen der porösen Materialien von entscheidender Bedeutung.

So können die vorliegend beschriebenen porösen Materialien beispielsweise für die katalytische Behandlung von Abgasen aus Verbrennungsprozessen, insbesondere Abgasen aus Verbrennungsmotoren oder Abgasen aus chemischen oder industriellen Prozessen, insbesondere Rauchgasen, Anwendung finden.

Beispielsweise können die vorliegend beschriebenen porösen Materialien insbesondere Anwendung finden in oder als Katalysatoren zur Behandlung von Abgasen von Verbrennungsmotoren. Auch für andere katalytische Verwendungen, z. B. bei sogenannten Umweltkatalysen, bei denen es um den Abbau umweltschädlicher Substanzen (z. B. sogenannte Volatile Organic Compounds oder VOCs) geht, können die porösen Materialien zur Anwendung kommen.

Weiterhin eignen sich die vorliegend beschriebenen porösen Materialien beispielsweise auch zur katalytischen Entfernung von Stickoxiden aus Abgasen von Verbrennungsprozessen. Zu diesem Zweck können insbesondere poröse Materialien auf Basis von V₂O₅/TiO₂ zum Einsatz kommen. Diese Anwendung ermöglicht unter anderem die Reinigung von mit organischen Stoffen verunreinigten Abwässern.

Weiterhin eignen sich die vorliegend beschriebenen porösen Materialien zur Katalyse chemischer Prozesse und Reaktionen.

Diesbezüglich lassen sich die porösen Materialien beispielsweise für die katalytische Herstellung bzw. Synthese von Massechemikalien (Bulk-Chemikalien) wie auch von Feinchemikalien (z. B. für die Hydrierung, die Oxidation etc.) einsetzen, beispielsweise im Rahmen der Herstellung von Schwefelsäure, Ammoniak etc.

Weiterhin können die vorliegend beschriebenen porösen Materialien Verwendung in der Photokatalyse finden. Zu diesem Zweck sind insbesondere poröse Materialien geeignet, welche TiO₂ enthalten.

Eine weitere Anwendungsmöglichkeit der porösen Materialien liegt in der Verwendung in oder als Gassensoren.

Weiterhin eignen sich die porösen Materialien beispielsweise auch in der Verwendung in Brennstoffzellen.

Schließlich eignen sich die porösen Materialien auch für sorptive, insbesondere adsorptive Anwendungen, insbesondere als vorzugsweise reaktives Adsorbens.

Im Rahmen der vorliegenden Erfindung lassen sich also kornförmige, insbesondere kugelförmige poröse Oxide des Titans und/oder des Vanadiums, insbesondere auf Basis selbsttragender bzw. trägerfreier Partikel dieser Oxide, herstellen. Insbesondere lassen sich mit dem erfindungsgemäßen Verfahren Oxide des Titans und/oder des Vanadiums mit gezielt einstellbarer Porosität als kornförmige bzw. kugelförmige Partikel von definierter Größe herstellen, wobei zu diesem Zweck kornförmige, insbesondere kugelförmige poröse Aktivkohlematerialien als struktur- und formgebende Agenzien in Form von Exotemplaten genutzt werden.

Die nach der vorliegenden Erfindung herstellbaren Materialien sind - wie zuvor geschildert - für die verschiedensten Anwendungen geeignet, z. B. als Katalysatoren, Katalysatorbestandteile oder Katalysatorträger, als (reaktive) Sorbentien, insbesondere Adsorbentien, für den Bereich der Brennstoffzellentechnologie, für den Bereich der Gassensoren etc.

Im Rahmen der vorliegenden Erfindung werden also unter Nutzung sogenannter Exotemplate auf der Grundlage von Aktivkohle kornförmige bzw. kugelförmige Oxide des Titans und/oder des Vanadiums erhalten. Auf diese Weise lassen sich die Porosität und die Partikeleigenschaften (wie z. B. der Kugeldurchmesser etc.) gezielt kontrollieren bzw. einstellen. Die erfindungsgemäß hergestellten Oxidpartikel verfügen über eine ausgezeichnete mechanische Stabilität und einen hohen Kristallinitätsgrad. Es resultieren Oxide mit definierter Porosität in Partikelform auf Basis von Körnern oder Kugeln mit einstellbaren Durchmessern. Durch die Nutzung von Aktivkohlekörnern bzw. Aktivkohlekugeln mit gezielt einstellbaren Eigenschaften (z. B. Partikeldurchmesser, Porosität, mechanische Stabilität, Oberflächeneigenschaften etc.) werden Oxide mit den entsprechend gewünschten Eigenschaften hergestellt.

Im Rahmen der vorliegenden Erfindung wird also die Synthese von Oxiden des Titans und/oder des Vanadiums durch die Nutzung von Aktivkohlekugeln mit definierten Eigenschaften als Exotemplaten beschrieben. Zu diesem Zweck werden insbesondere Vorläufer dieser Oxide, wie z. B. Metallsalze oder Metallalkoxide, in Lösung oder Suspension in die Poren der Aktivkohlekugeln eingebracht, wobei bevorzugt zu diesem Zweck Nanosole der entsprechenden Oxide eingesetzt werden. Nach Trocknung und gegebenenfalls Vernetzung der Oxide oder ihrer Vorläufer in den Poren der Aktivkohle wird die Aktivkohle pyrolytisch bzw. mittels Abbrand entfernt. Je nach Ausgangsverbindung können Oxide des Titans, Oxide des Vanadiums, Titan/Vanadium-Mischoxide oder Titanoxid/Vanadiumoxid-Mischungen hergestellt werden, welche gegebenenfalls noch weitere Komponenten - wie zuvor definiert - enthalten können.

Durch die Nutzung der Aktivkohlekugeln als Exotemplate mit definierten Partikeldurchmessern, definierter Porosität und hoher mechanischer Stabilität können auch die Eigenschaften der resultierenden Oxide (wie z. B. Partikeldurchmesser, Porosität, mechanische Stabilität etc.) gezielt eingestellt bzw. kontrolliert werden. Das erfindungsgemäße Verfahren ist zudem universell anwendbar.

Durch eine gezielte Modifikation der Oberflächeneigenschaften der Exotemplate, insbesondere durch hydrophile oder hydrophobe Ausrüstung der entsprechenden Aktivkohlekugeln, lässt sich die Beladung mit verschiedenen Lösungen oder Dispersionen der Oxidvorläufer besonders effizient gestalten: Sowohl die Geschwindigkeit als auch die Menge der Beladung in den Aktivkohlekugeln kann gegenüber nichtmodifizierten Aktivkohlekugeln deutlich gesteigert werden.

Zudem erlaubt das erfindungsgemäße Verfahren auch die zusätzliche Zugabe von Endotemplaten, insbesondere auf Basis von strukturdirigierenden oder porogenen (porenbildenden) Reagenzien, mit denen weitere Porensysteme in den resultierenden Oxiden erzeugt werden können. Solche Porensysteme besitzen insbesondere andere Strukturen und andere Porendurchmesserbereiche als diejenigen, welche durch die Porosität des Exotemplats hervorgerufen werden. Es resultieren auf diese Weise hierarchisch strukturierte Materialien mit bimodaler bzw. multimodaler Porengrößenverteilung.

Insbesondere lassen sich im Rahmen der erfindungsgemäßen Herstellung auch Oxidkugeln bzw. -körner des Titans und/oder des Vanadiums von hoher mechanischer Stabilität erzeugen.

Insgesamt zeichnen sich die Oxidprodukte durch ihre Korn- bzw. Kugelform sowie ihre einstellbaren Eigenschaften der chemischen Zusammensetzung, des Kugeldurchmessers und der Porosität sowie der mechanischen Stabilität aus.

Im Rahmen der vorliegenden Erfindung ist es somit erstmals gelungen, ein effizientes Verfahren für die Herstellung solcher Materialien bereitzustellen. Derartige Materialien, welche alle vorgenannten Eigenschaften ineinander vereinigen, sind nach dem Stand der Technik bislang noch nicht hergestellt worden.

Im Folgenden wird die vorliegende Erfindung anhand von bevorzugte Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:
- Fig. 1: eine schematische Darstellung eines Templatverfahrens (Templatsynthese) anhand einer Endotemplat-Synthese einerseits (Fig. 1A) und einer Exotemplat-Synthese andererseits (Fig. 1B),
- Fig. 2: eine schematische Darstellung des erfindungsgemäßen Verfahrensablaufs unter Verwendung sowohl von Exotemplaten als auch von Endotemplaten zur Ausbildung einer bimodalen Porengrößenverteilung in den resultierenden Produkten,
- Fig. 3: REM-Aufnahmen einer erfindungsgemäß als Exotemplat eingesetzten kugelförmigen Aktivkohle (Fig. 3A) sowie eines vorliegend beschriebenen partikulären porösen Materials (Fig. 3B),
- Fig. 4: Stickstoffsorptionsisothermen von vorliegend beschriebenen porösen Mischoxid-Partikeln, welche mit Exotemplat oder mit Endo- und Exotemplat hergestellt sind gegenüber einer nichterfindungsgemäßen Ausführungsform, welche nur mit Endotemplat hergestellt ist,
- Fig. 5: Porendurchmesserverteilungen von vorliegend beschriebenen porösen Mischoxidpartikeln unter Verwendung nur eines Exotemplats und unter Verwendung eines Endo- und Exotemplats gegenüber einer nichterfindungsgemäßen Ausführungsform nur unter Verwendung eines Endotemplats,
- Fig. 6: Porendurchmesserverteilungen verschiedener vorliegend beschriebener poröser Mischoxidpartikel unter Einfluss des Endotemplatanteils,
- Fig. 7: graphische Darstellungen von Stickstoffsorptionsisothermen vorliegend beschriebener poröser Mischoxidpartikel ausgehend von unterschiedlichen Aktivkohle-Exotemplaten,
- Fig. 8: Stickstoffsorptionsisothermen von vorliegend beschriebenen porösen V₂O₅/TiO₂-Mischoxidpartikeln mit variierendem Vanadiumoxid- und Titanoxid-Gehalt,
- Fig. 9: Röntgenpulverdiffraktogramme von vorliegend beschriebenen porösen V₂O₅/TiO₂-Mischoxidpartikeln mit variierendem Vanadiumoxid- und Titanoxid-Gehalten,
- Fig. 10: REM-Aufnahme eines vorliegend beschriebenen porösen Mischoxids.

Fig. 1 zeigt eine schematische Darstellung eines Templatverfahrens (Templatsynthese). Die obere Abbildung gemäß Fig. 1A zeigt schematisch eine Endotemplat-Synthese, im Rahmen derer das Templat von den Ausgangsverbindungen umgeben bzw. eingeschlossen und nachfolgend entfernt wird. Bei der unteren Abbildung gemäß Fig. 1B werden dagegen die Ausgangsverbindungen in das Templat bzw. dessen Hohlräume (Poren) eingebracht, bevor das Templat dann nach erfolgter Reaktion entfernt wird. In beiden Fällen wird sozusagen ein Negativabdruck des Templats erhalten. Wie zuvor beschrieben, treten in der Praxis aufgrund verschiedener Effekte, insbesondere aufgrund von Sinterungs- und Kristallisationseffekten, jedoch Abweichungen hiervon auf.

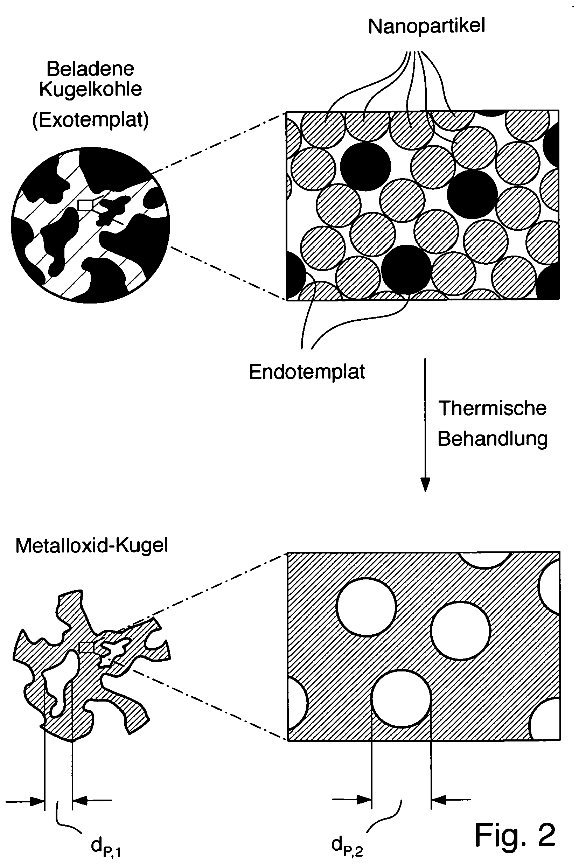

Im Rahmen der vorliegenden Erfindung können Exotemplat- und Endotemplat-Synthese miteinander kombiniert werden. Dies ist in der Fig. 2 veranschaulicht, welche eine schematische Darstellung des erfindungsgemäßen Verfahrensablaufs unter Verwendung sowohl von Exotemplaten als auch von Endotemplaten zeigt. Zu diesem Zweck kann eine sowohl die MetalloxidNanopartikel als auch die Endotemplate enthaltende Dispersion oder Lösung in das Exotemplat (Kugelaktivkohle) eingebracht werden, woraufhin sich dann eine thermische Behandlung zu Zwecken der Kalzinierung und Entfernung des Exotemplats sowie des Endotemplats anschließt. Es resultiert ein Produkt, welches eine bimodale Porengrößenverteilung aufweist, wobei in der Figurendarstellung gemäß Fig. 2 der Porendurchmesser "d_{P,1}" das Porensystem bzw. Porendurchmesser infolge der Verwendung des Exotemplats und der Porendurchmesser "d_{P,2}" das Porensystem bzw. den Porendurchmesser infolge der Verwendung des Endotemplats zeigt.

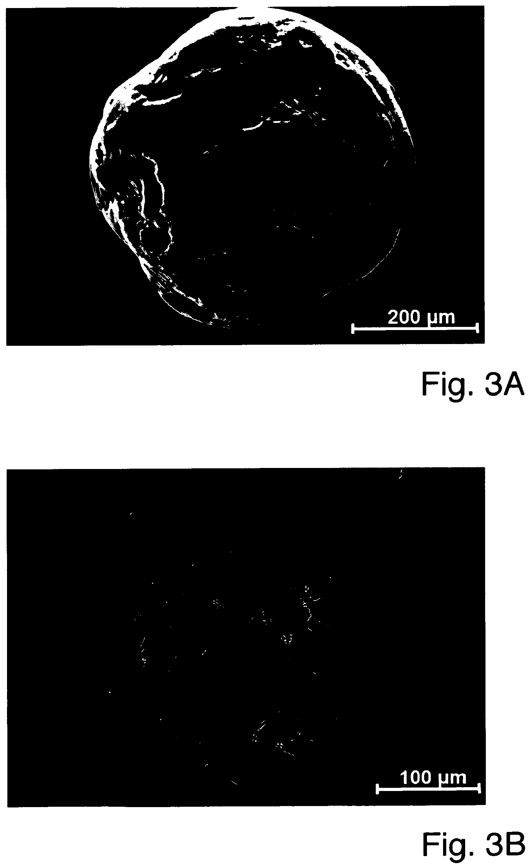

Die Figurendarstellung gemäß Fig. 3 zeigt REM-Aufnahmen einer erfindungsgemäß als Exotemplat eingesetzten kugelförmigen Aktivkohle (Fig. 3A) sowie eines vorliegend beschriebenen partikulären porösen Materials (Fig. 3B), wobei sowohl Exotemplat als auch Produkt in kugelförmiger Form vorliegen bzw. erhalten werden. Wie die Maßstabsangabe in den Figurendarstellungen gemäß Fig. 3A und Fig. 3B jedoch zeigt, weisen die Kugeln des Produkts deutlich geringere Durchmesser gegenüber den eingesetzten Aktivkohlekugeln auf, was sich auf eine Verdichtung der Phasen aufgrund von Kristallisationseffekten zurückführen lässt.

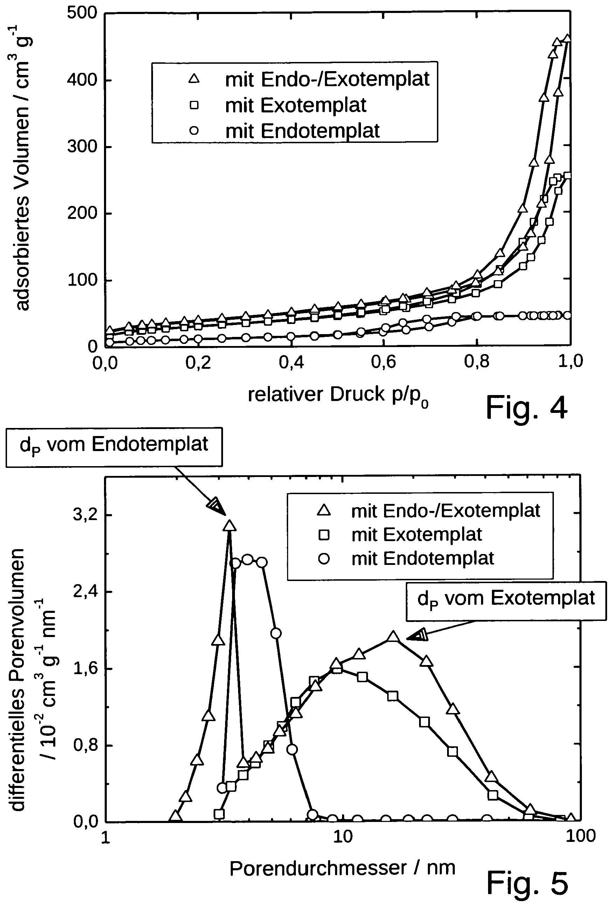

Fig. 4 wiederum zeigt verschiedene Stickstoffsorptionsisothermen (d. h. Adsorptions- sowie Desorptionsisothermen) von vorliegend beschriebenen porösen Mischoxid-Partikeln. Die beiden oberen Kurven (mit dem Symbol "Dreieck") betreffen Produkte, welche sowohl mit Endo- als auch mit Exotemplat hergestellt worden sind, während die mittleren Kurven (mit dem Symbol "Quadrat") Produkte betreffen, welche nur mit Exotemplat hergestellt sind. Die beiden unteren Kurven (mit dem Symbol "Kreis") sind nichterfindungsgemäße Produkte, welche nur unter Verwendung von Endotemplat hergestellt sind.

Die Figurendarstellung gemäß Fig. 5 wiederum zeigt Porendurchmesserverteilungen von vorliegend beschriebenen porösen Mischoxidpartikeln, welche unter Verwendung nur eines Exotemplats (Symbol "Quadrat") oder unter Verwendung eines Endo- und Exotemplats (Symbol "Dreieck") hergestellt sind. Als Vergleich dient ein nichterfindungsgemäßes Produkt, welches nur mit Endotemplat hergestellt worden ist (Symbol "Kreis"). Wie Fig. 5 zeigt, führt die Verwendung sowohl von Endo- als auch Exotemplat zu einer bimodalen Porendurchmesserverteilung infolge zweier Porensysteme, von denen eines auf das Exotemplat und das andere auf das Endotemplat zurückgeht.

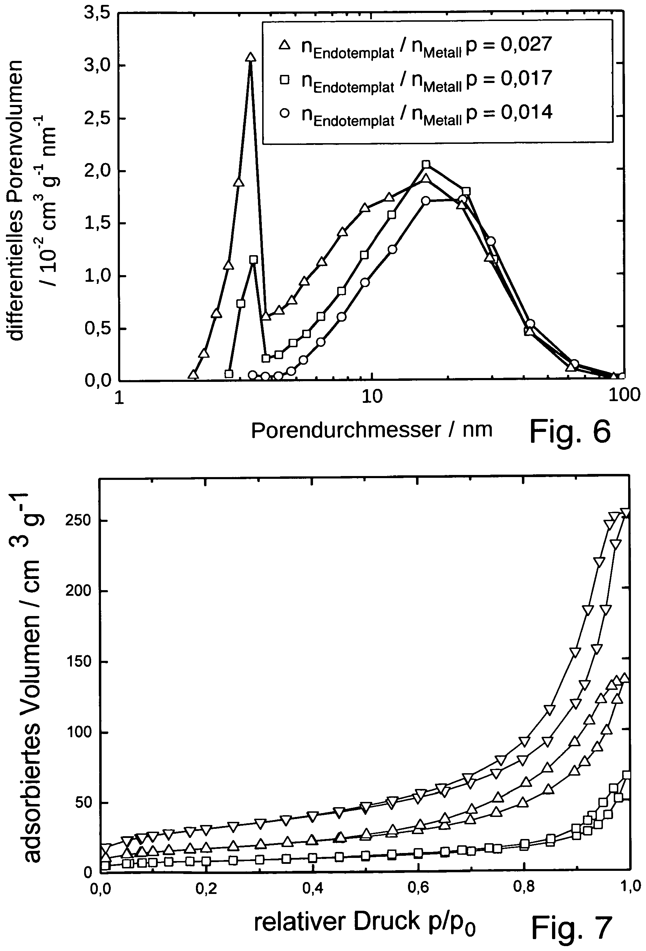

Fig. 6 wiederum zeigt den Einfluss des Endotemplatgehalts auf die Ausbildung des zweiten Porensystems bei kombinierter Exotemplat- und Endotemplat-Synthese.

Die Figurendarstellung gemäß Fig. 7 wiederum zeigt graphische Darstellungen von Stickstoffsorptionsisothermen verschiedener poröser Mischoxidpartikel, welche ausgehend von unterschiedlichen Aktivkohle-Exotemplaten hergestellt worden sind (vgl. Ausführungsbeispiel 6).

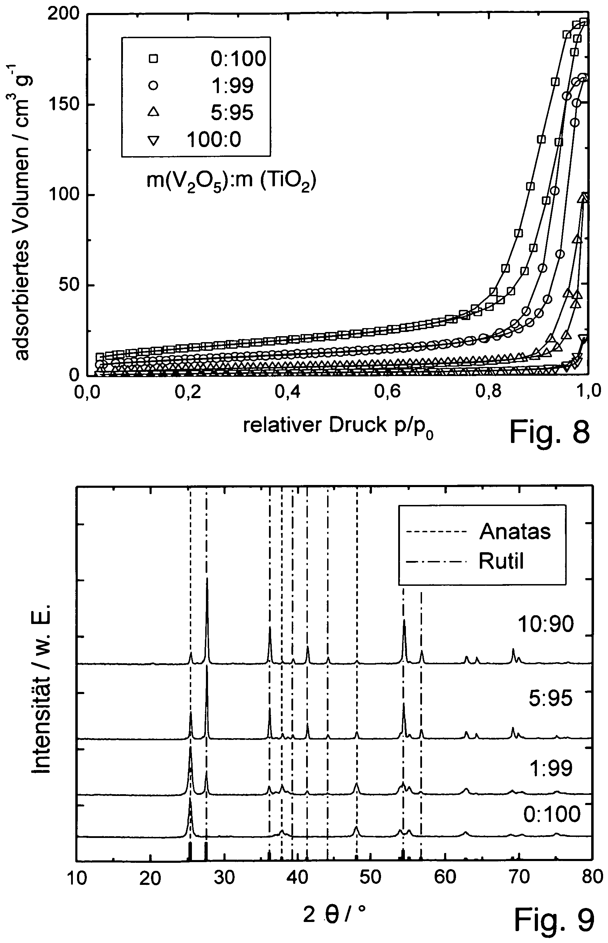

Die Figurendarstellung gemäß Fig. 8 zeigt verschiedene Stickstoffsorptionsisothermen von vorliegend beschriebenen porösen V₂O₅/TiO₂-Mischoxidpartikeln mit variierendem Vanadiumoxid- und Titanoxid-Gehalt, während Fig. 9 die entsprechenden Röntgenpulverdiffraktogramme dieser Produkte zeigt.

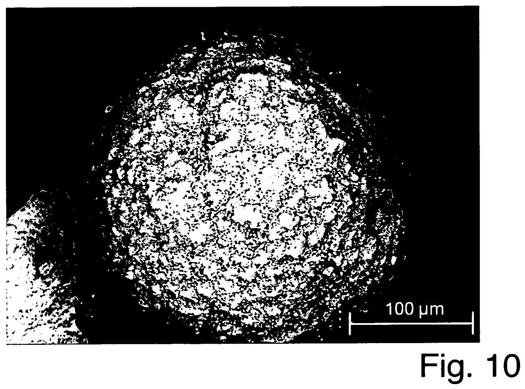

Fig. 10 zeigt schließlich eine REM-Aufnahme eines vorliegend beschriebenen porösen Mischoxids.

Die voranstehend erläuterten Figurendarstellungen werden auch im Rahmen der Ausführungsbeispiele nochmals weiterführend erläutert werden.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Ausführungsbeispiel 1 (nichterfindungsgemäß):

Für die Synthese von porösen Titan/Vanadium-Mischoxidpartikeln (TiO₂/V₂O₅-Mischoxidpartikeln) wurde zunächst ein gemeinsames Sol von TiO₂-Nanopartikeln und V₂O₅-Nanopartikeln hergestellt. Die betreffenden Nanopartikel wurden durch Präzipitation ausgehend von entsprechenden Präkursorsalzen der beiden vorgenannten Metalle erhalten.

Ein Teil des Sols wurde als solches eingesetzt. Ein weiterer Teil des Sols wurde mit verschiedenen Mengen eines Endotemplats versehen (Triblockcopolymer vom Typ Pluronic® von der BASF, Ludwigshafen, Deutschland, einem Blockcopolymer aus Ethylenoxid und Propylenoxid [= Poloxamer]); die molare Menge des Triblockcopolymers ("TBC") wird relativ zur Gesamtmetallmenge (d. h. Titan und Vanadium) im Sol ("n_{TBC}/n_{Metalle}") angegeben.

In einem nächsten Schritt wurden 2,5 g Aktivkohlekugeln nach Trocknung bei 110 °C an Luft Aktivkohle von der Adsor-Tech GmbH, Premnitz, Deutschland [BET-Oberfläche: 1.748 m²/g, Gesamtporenvolumen nach Gurvich: 2 cm³/g, Kugeldurchmesser: 0,45 bis 0,50 mm]) mit den zuvor hergestellten Nanopartikel-Solen imprägniert. Nach Trocknung bei 60 °C wurden die auf diese Weise beladenen Aktivkohlekugeln dann bei 600 °C fünf Stunden lang in einem Luftstrom von 40 cm³/min kalziniert, um den Kohlenstoff mittels Pyrolyse zu entfernen. Aus den so erhaltenen farblosen TiO₂/V₂O₅-Kugeln wurden Kornfraktionen im Bereich von 0,2 bis 0,4 mm ausgesiebt.

Zum Vergleich wurden auch Synthesen einerseits ohne Aktivkohlekugeln (d. h. ohne Exotemplat) (nichterfindungsgemäß) und andererseits ohne Triblockcopolymer, aber mit Aktivkohlekugeln (nichterfindungsgemäß) und zum weiteren Vergleich nur mit Triblockcopolymer (n_{TBC}/n_{Metalle} = 0,020) (nichterfindungsgemäß) durchgeführt. Zudem wurde zum weiteren Vergleich Titan/Vanadium-Mischoxid durch gemeinsame Fällung aus einer wässrigen Lösung hergestellt (nichterfindungsgemäß).

Die Partikelmorphologie der erhaltenen Feststoffe wurde mittels Rasterelektronmikroskopie (REM, Philips, ESEM XL 30 FEG), das Porensystem mittels Stickstoffsorption bei -196 °C (Micromeritics, ASAP 2010) und die vorliegenden Phasen mittels Röntgenpulverdiffrakometrie der zuvor gemörserten Proben (XRD, Siemens, D5000) charakterisiert.

Ausgehend von einem gemeinsamen Sol von Titandioxid-Nanopartikeln und Vanadiumpentoxid-Nanopartikeln und einer kugelförmigen Aktivkohle als Exotemplat wurde poröses Titan/Vanadium-Mischoxid in Form von Partikeln hergestellt. Die rasterelektronmikroskopischen Aufnahmen der Exotemplatkugeln (vgl. Fig. 3A) und des Produkts (vgl. Fig. 3B) zeigen, dass auch das Endprodukt in Form von Kugeln erhalten wurde. Der überwiegende Teil der erhaltenen Kugeln (< 80 Masse-%) besitzt einen Durchmesser im Bereich von 0,2 bis 0,4 mm. Der geringere Durchmesser der Kugeln des Produkts gegenüber den eingesetzten Aktivkohlekugeln lässt sich auf eine Verdichtung der Phasen aufgrund von Kristallisationseffekten zurückführen, welche bei der Entfernung der Aktivkohle durch Abbrand stattfindet. Die mechanische Stabilität der vorliegend beschriebenen Partikel ist auch deutlich höher als diejenige von Vergleichsprodukten, welche nach Imprägnierung der Aktivkohlekugeln mit einer Lösung der Metallsalze anstelle des Nanosols erhalten werden.

Die REM-Aufnahmen einer Bruchfläche der erhaltenen Produkte belegt, dass bei der Synthese nicht eine bloße Agglomeration von Nanopartikeln stattgefunden hat, sondern dass sich im Partikelinneren ein Titan/Vanadium-Mischoxid-Netzwerk mit einem Porensystem gebildet hat, welches dem ursprünglichen Kohlenstoff-Exotemplat in seiner Gestalt ähnelt.

Auch die mittels Stickstoffsorption bestimmte spezifische Oberfläche belegt eine ausgeprägte Porosität der mit Exotemplat hergestellten Partikel (vgl. Tabelle 1). Dagegen resultiert in Abwesenheit des Exotemplats ein Produkt mit einer nur geringen spezifischen Oberfläche (vgl. Tabelle 1). Auch gegenüber einem durch konventionelle Fällungssynthese hergestellten Produkt ist die spezifische Oberfläche des mit dem Aktivkohle-Exotemplat synthetisierten Produkts bedeutend höher; Entsprechendes gilt für die spezifischen Porenvolumina, welche ebenfalls in Tabelle 1 aufgeführt sind.

Die vorteilhafte Wirkung des Kohlenstoff-Exotemplats auf die Ausbildung eines offenen Porensystems äußert sich zudem in einem gegenüber den in Abwesenheit des Kohlenstoffs oder gegenüber den durch Fällung hergestellten Produkten wesentlich größeren mittleren Porendurchmesser (vgl. Tabelle 1). Dieser Porendurchmesser liegt auch deutlich über dem Porendurchmesser der eingesetzten Aktivkohlekugeln. Da die Aktivkohle zudem auch Mikroporen besitzt, kann das Porensystem der Produktkugeln nicht als direkter Negativabdruck des Aktivkohle-Porensystems aufgefasst werden.

Auch die Stickstoffsorptionsisotherme vom Typ IV mit einer charakteristischen Hysterese bei p/p₀ < 0,7 deutet auf ein hauptsächlich mesoporöses Material hin (vgl. Fig. 4, insbesondere linker Teil); die Verteilung der Porendurchmesser mit einem Maximum bei ca. 10 nm ist jedoch breit (vgl. Fig. 4, insbesondere rechter Teil).

Wie das Röntgenpulverdiffraktogramm ferner zeigt, liegt keine Phasentrennung zwischen TiO₂ und V₂O₅ vor. Mit variierendem Gehalt an Titan und/oder Vanadium variieren die Kristallphasen (vgl. Fig. 9). Diese Befunde entsprechen der zuvor erwähnten Stabilisierung einer thermodynamisch instabilen Phase bei der Kristallisation unter der räumlichen Einschränkung in den Poren der als Exotemplat eingesetzten Aktivkohle.

Wie zuvor beschrieben, kann ein zusätzliches Mesoporensystem erzeugt werden, indem dem Nanosol für die Imprägnierung der Aktivkohlekugeln zusätzlich ein Endotemplat auf der Basis des Triblockcopolymers Pluronic® der BASF zugegeben wird. Nach der Synthese in Gegenwart von Endo- und Exotemplat liegt wiederum kugelförmiges Mischoxid mit ähnlicher Partikelgrößenverteilung wie bei der Synthese mit Exotemplat allein vor. Gegenüber dem nur mit Exotemplat erhaltenen Material ist die Stickstoffsorptionskapazität deutlich erhöht (vgl. Fig. 5, insbesondere linker Teil). In der Porendurchmesserverteilung tritt ein zusätzliches Maximum bei circa 3 nm auf. Dies belegt die Bildung eines zusätzlichen Porensystems mit Abmessungen, welche nahezu eine Größenordnung geringer sind als diejenigen der Poren, welche aufgrund des Aktivkohle-Exotemplats erhalten werden. Ein Porensystem mit ähnlichem Maximum entsteht auch dann, wenn die Synthese nur in Gegenwart des Endotemplats durchgeführt wird (vgl. Fig. 5, insbesondere rechter Teil); allerdings resultiert dann auch eine wesentlich geringere spezifische Oberfläche (vgl. Tabelle 1). Zudem weitet sich die Durchmesserverteilung der auf das Aktivkohle-Exotemplat zurückzuführenden Poren zu größeren Werten hin auf, und ihr Maximum verschiebt sich von circa 10 nm in Abwesenheit des Endotemplats auf circa 20 nm in Anwesenheit beider Template (vgl. Fig. 5, insbesondere rechter Teil). Der zusätzliche Raumbedarf des Endotemplats bei der Kristallisation der Mischoxide in den Poren des Aktivkohle-Exotemplats könnte hierfür verantwortlich sein, ohne sich jedoch auf eine bestimmte Theorie oder Erklärung festlegen zu wollen.

Um den Einfluss des Endotemplats auf die Bildung des zusätzlichen Porensystems besser zu verstehen, wurde sein Gehalt in dem zur Imprägnierung des Aktivkohle-Exotemplats verwendeten Nanosols variiert. Bei Anteilen bis zu n_{TBC}/n_{Metall} = 0,014 bleibt die Zugabe des Endotemplats praktisch ohne Einfluss auf die Porendurchmesserverteilung des Endprodukts (vgl. Fig. 6). Erst bei Anteilen n_{TBC}/n_{Metall} = 0,017 oder darüber hinaus tritt in der Porendurchmesserverteilung das zusätzliche Maximum bei ca. 3 nm auf (vgl. Fig. 6). Zudem nehmen dann die spezifische Oberfläche und das Porenvolumen merklich zu (vgl. Tabelle 1). Wird der Anteil des Endotemplats auf n_{TBC}/n_{Metall} = 0,027 erhöht, nimmt auch der Anteil des Mesoporensystems um 3 nm deutlich zu, und die Porendurchmesserverteilung der aufgrund des Exotemplats gebildeten Poren verschiebt sich zu kleineren Werten (vgl. Fig. 6). Eine mögliche Erklärung ist (ohne sich jedoch auf eine bestimmte Theorie festlegen zu wollen), dass das Endotemplat größere Anteile des Porensystems des Aktivkohle-Exotemplats einnimmt, welches für die Partikel des Nanosols dann nicht mehr zu Verfügung steht.

Als Schlussfolgerung lässt sich Folgendes feststellen: Durch Imprägnierung von kugelförmigen Aktivkohlepartikeln mit einem gemeinsamen Nanosol von Titandioxid und Vanadiumpentoxid unter anschließender Entfernung der Aktivkohle durch Abbrand (Exotemplat-Synthese) kann vorliegend hochporöses partikuläres Titan/Vanadium-Mischoxidmaterial mit definierter Partikelmorphologie und hoher Kristallinität synthetisiert werden. Verwendet man bei der Synthese zusätzlich zu dem Aktivkohle-Exotemplat auch noch ein Endotemplat (z. B. Triblockcopolymer), wird ein hierarchisch strukturiertes Porensystem mit einer bimodalen Porendurchmesserverteilung mit Maxima um 3 nm bzw. 20 nm erhalten. Der Anteil des durch das Endotemplat hervorgerufenen Porensystems lässt sich durch die Menge des zugesetzten Endotemplats gezielt einstellen.

Die spezifische Oberfläche und das spezifische Porenvolumen der vorliegend beschriebenen Produkte sind um ein Mehrfaches höher als für ein mittels konventioneller Fällung synthetisiertes Produkt.

Die Kombination von Exo- und Endotemplaten eröffnet die Möglichkeit, auch andere kristalline, aber auch amorphe Metalloxide und Metallmischoxide mit hierarchisch strukturiertem bimodalem Porensystem und zugleich definierter Partikelmorphologie gezielt und auf einfache Weise herzustellen.

**Tabelle 1**

| **Versuch** | **Produkteigenschaften** | | |
|---|---|---|---|
| | **BET-Oberfläche** / **m² g⁻¹** | **Gesamtporenvolumen V_{BJH} / cm³ g⁻¹** | **Porendurchmesser D_{BJH} / nm** |
| Fällungssynthese (Stand der Technik) * | 64 | 0,10 | 5,8 |
| ohne Exo- oder Endotemplat (n.e.) * | 5 | < 0,01 | 8,1 |
| nur mit Endotemplat * (n_{TBC}/n_{Metalle} = 0,020) | 39 | 0,07 | 5,3 |
| | | | |
| nur mit Exotemplat | 113 | 0,44 | 15,5 |
| mit Exo-und Endotemplat (n_{TBC}/n_{Metalle} = 0,007) | 119 | 0,54 | 18,1 |
| mit Exo- und Endotemplat (n_{TBC}/n_{Metalle} = 0,014) | 124 | 0,59 | 22,9 |
| mit Exo-und Endotemplat (n_{TBC}/n_{Metalle} = 0,017) | 131 | 0,62 | 18,9 |
| mit Exo- und Endotemplat (n_{TBC}/n_{Metalle} = 0,020) | 147 | 0,74 | 21,7 |
| mit Exo-und Endotemplat (n_{TBC}/n_{Metalle} = 0,027) | 171 | 0,63 | 15,7 |

| | | | |
|---|---|---|---|
| 1) Die mit "*" gekennzeichneten Versuche sind nichterfindungsgemäße Versuche. 2) TBC = Triblockcopolymer | | | |

### Ausführungsbeispiel 2:

Um den Einfluss der Oberflächenmodifizierung des eingesetzten Exotemplats zu untersuchen, wurden verschiedene oberflächenmodifizierte Exotemplate hergestellt und mit unterschiedlichen Nanosolen auf Basis von Titandioxid-Nanopartikeln und Vanadiumpentoxid-Nanopartikeln imprägniert.

Die Erzeugung polarer bzw. hydrophiler Exotemplatoberflächen erfolgte entweder mittels thermischer Oxidationsbehandlung in Gegenwart einer sauerstoffhaltigen Atmosphäre im Rahmen der Aktivierung bei der Herstellung der Aktivkohle (nicht erfindungsgemäß) oder aber durch chemische Oxidation der fertigen Aktivkohle mit einem geeigneten chemischen Oxidationsmittel (z. B. Salpetersäure oder Wasserstoffperoxid). Die auf diese Weise polar bzw. hydrophil eingestellten Exotemplate wurden mit wässrigem Nanosol auf Basis von Titandioxid-Nanopartikeln und Vanadiumpentoxid-Nanopartikeln imprägniert. Die Versuchsdurchführung erfolgt gemäß Ausführungsbeispiel 1.

Die Erzeugung hydrophober Exotemplatoberflächen erfolgt mittels reduktiver Behandlung mit Wasserstoff. Die auf diese Weise hydrophob eingestellten Exotemplate wurden mit organischem Nanosol in n-Hexan auf Basis von Titandioxid-Nanopartikeln und Vanadiumpentoxid-Nanopartikeln imprägniert. Die Versuchsdurchführung erfolgt gemäß Ausführungsbeispiel 1.

Die auf diese Weise erhaltenen Produkte zeigen im Vergleich zu Versuchen, bei denen nichtmodifiziertes Exotemplat eingesetzt wurde, eine weitergehend gesteigerte Leistungsfähigkeit, insbesondere im Hinblick auf eine weitergehende Verbesserung der BET-Oberfläche und des Gesamtporenvolumens. Auch die mechanischen sowie die katalytischen Eigenschaften sind gegenüber den Versuchen mit dem nichtmodifizierten Exotemplat verbessert.

Die Versuchsergebnisse sind in der nachfolgenden Tabelle 2 zusammengefasst.

**Tabelle 2**

| **Versuch** | **Produkteigenschaften** | | |
|---|---|---|---|
| | **BET-Oberfläche** / **m² g⁻¹** | **Gesamtporenvolumen V_{BJH}** / **cm³ g⁻¹** | **Porendurchmesser D_{BJH}** / **nm** |
| **Nicht vorbehandeltes Exotemplat *** | | | |
| nur mit Exotemplat | 113 | 0,44 | 15,5 |
| mit Exo-und Endotemplat (n_{TBC}/n_{Metalle} = 0,020) | 147 | 0,74 | 21,7 |
| | | | |
| **Hydrophil/polar eingestelltes Exotemplat mittels thermischer Oxidationsbehandlung und wässriges Nanopartikelsol *** | | | |
| nur mit Exotemplat | 155 | 0,75 | 16,5 |
| mit Exo-und Endotemplat (n_{TBC}/n_{Metalle} = 0,020) | 188 | 0,99 | 21,9 |
| | | | |
| **Hydrophil/polar eingestelltes Exotemplat mittels chemischer Oxidationsbehandlung mit HNO₃ oder H₂O₂ und wässriges Nanopartikelsol** | | | |
| nur mit Exotemplat | 158 | 0,76 | 16,5 |
| mit Exo-und Endotemplat (n_{TBC}/n_{Metalle} = 0,020) | 196 | 0,99 | 21,9 |
| | | | |
| **Hydrophob eingestelltes Exotemplat mittels reduktiver Behandlung mit H₂ und organisches Nanopartikelsol in n-Hexan** | | | |
| nur mit Exotemplat | 164 | 0,82 | 15,9 |
| mit Exo-und Endotemplat (n_{TBC}/n_{Metalle} = 0,020) | 198 | 0,99 | 22,1 |

| | | | |
|---|---|---|---|
| Die mit "*" gekennzeichneten Versuche sind nichterfindungsgemäße Versuche. | | | |

### Ausführungsbeispiel 3:

In entsprechender Weise, wie für die Ausführungsbeispiele 1 und 2 beschrieben, wurde die Synthese von porösen Vanadiumpentoxid-Partikeln durchgeführt. Für die Synthese der porösen Vanadiumpentoxid-Partikel wurde zunächst ein Sol von Vanadiumpentoxid-Nanopartikeln hergestellt. Die Versuchsdurchführung erfolgt entsprechend den Ausführungsbeispielen 1 und 2. Es wurden analoge Ergebnisse zu den Ausführungsbeispielen 1 und 2 erhalten.

### Ausführungsbeispiel 4:

In entsprechender Weise, wie für die Ausführungsbeispiele 1 bis 3 beschrieben, wurde die Synthese von porösen Titandioxid-Partikeln durchgeführt. Für die Synthese der porösen Titandioxid-Partikel wurde zunächst ein Sol von Titandioxid-Nanopartikeln hergestellt. Die Versuchsdurchführung erfolgt entsprechend den Ausführungsbeispielen 1 bis 3. Es wurden analoge Ergebnisse zu den Ausführungsbeispielen 1 bis 3 erhalten.

### Ausführungsbeispiel 5:

Die vorliegend beschriebenen Oxidpartikel des Titans und/oder Vanadiums wurden für verschiedene katalytische Anwendungen getestet und lieferten dort ausgezeichnete Ergebnisse.

Insbesondere zeigten Mischoxidpartikel auf Basis von TiO₂/V₂O₅ ausgezeichnete Ergebnisse bei der katalytischen Abgasbehandlung von Abgasen aus Verbrennungsmotoren und bei der katalytischen Entfernung von Stickoxiden aus industriellen Abgasen.

### Ausführungsbeispiel 6 (nichterfindungsgemäß):

In einer weiteren Versuchsreihe mit einer entsprechenden Versuchsdurchführung wie in Ausführungsbeispiel 1 wurde der Einfluss der Eigenschaften des Exotemplats auf die resultierenden Endprodukte untersucht. Zu diesem Zweck wurden in den unterschiedlichen Versuchsansätzen verschiedene Aktivkohlen der Adsor-Tech GmbH, Premnitz, Deutschland, als Exotemplate eingesetzt. Die texturellen Eigenschaften der für die Templat-Synthese eingesetzten Aktivkohlekugeln sind in der nachfolgenden Tabelle 3 zusammengefasst.

**Tabelle 3**

| **Eingesetzte Aktivkohle (Exotemplat)** | **Exotemplat-Eigenschaften** | | | |
|---|---|---|---|---|
| | **BET/ m² g⁻¹** | **Gesamtporenvolumen V_{Gurvich}/ cm³ g⁻¹** | **Mittlerer Porendurchmesser / nm** | **Mikroporenvolumen/ cm³ g⁻¹** |
| Nr. 1 | 1.439 | 0,7013 | 1,904 | 0,5741 |
| Nr. 2 | 1.938 | 1,2270 | 2,334 | 0,8333 |
| Nr. 3 | 1.560 | 1,1970 | 2,950 | 0,5910 |
| Nr. 4 | 1.748 | 1,9890 | 4,349 | 0,5475 |
| Nr. 5 | 1.663 | 2,4210 | 5,590 | 0,5327 |
| Nr. 6 | * | 3,2 | * | * |
| Nr. 7 | * | 2,5 | * | * |

| | | | | |
|---|---|---|---|---|
| * = keine Angabe des Herstellers | | | | |

Die texturellen Eigenschaften bzw. Daten der resultierenden porösen Materialien, welche mit den unterschiedlichen Aktivkohle-Exotemplaten hergestellt wurden, sind in der nachfolgenden Tabelle 4 zusammengefasst.

**Tabelle 4**

| **Produkt ausgehend von Exotemplat** | **Eigenschaften der Produkte** | | | |
|---|---|---|---|---|
| | **BET/ m² g⁻¹** | **V_{BJH}/ cm³ g⁻¹** | **D_{BJH}/ nm** | **SP-Oberfläche (p/p₀ = 0,25)** / **m² g⁻¹** |
| Nr. 1 | 137 | 0,5 | 18 | 133 |
| Nr. 2 | 168 | 0,5 | 13 | 161 |
| Nr. 3 | 196 | 0,6 | 26 | 192 |
| Nr. 4 | 114 | 0,6 | 13 | 111 |
| Nr. 5 | 199 | 0,7 | 19 | 192 |
| Nr. 6 | 142 | 0,5 | 25 | 141 |
| Nr. 7 | 199 | 0,5 | 14 | 189 |

### Ausführungsbeispiel 7 (nichterfindungsgemäß):

Es wurden weitere Herstellungsbeispiele entsprechend den zuvor beschriebenen Beispielen durchgeführt, welche nachfolgend näher erläutert sind. Sofern nicht abweichend angegeben, kommen identische Ausgangsmaterialien zum Einsatz wie in den vorangehenden Beispielen.

### Vanadiumpentoxidsynthese (Synthese mit Metallisopropylaten)

Aktivkohlekugeln (1 bis 5 g) wurden mit VO(OⁱPr)₃ (Alfa Aesar, 96%; 1,99 ml pro 1 g Aktivkohle) trocken imprägniert. Diese Mischung wurde für einen Tag gealtert, um in Anwesenheit von Luftfeuchtigkeit zu kondensieren. Dann wurde das Produkt bei 383 K an Luft getrocknet und anschließend 5 h bei 873 K calciniert (Aufheizrate 2 K min⁻¹, 40 ml min⁻¹ Luftstrom).

### Vanadium/Titan-Mischoxide (Synthese mit Metallisopropylaten)

Ti(OⁱPr)₄ (Aldrich, 97%) und VO(OⁱPr)₃ (Alfa Aesar, 96%) wurden in verschiedenen Stoffmengenverhältnissen (n_{Ti}/n_{V} = 99/1, 95/5, 90/10, 80/20) miteinander vermischt. Im Anschluss wurden Aktivkohlekugeln (1 bis 5 g) damit trocken imprägniert (1,99 ml pro 1 g Aktivkohle). Die erhaltenen Materialien wurden einen Tag gealtert, um in Anwesenheit von Luftfeuchtigkeit zu kondensieren. Nachfolgend wurde das Produkt bei 383 K an Luft getrocknet und anschließend 5 h bei 873 K calciniert (Aufheizrate 2 K min⁻¹, 40 ml min⁻¹ Luftstrom).

### Titandioxid (Synthese mit Metallisopropylaten)

Aktivkohle (1 bis 10 g) wurde mit Ti(OⁱPr)₄ (Aldrich, 97%) trocken imprägniert. Zu der beladenen Aktivkohle wurde deionisiertes Wasser (0,2 ml g⁻¹ Aktivkohle) hinzugefügt, um die Hydrolyse einzuleiten. Das Produkt wurde bei 383 K an Luft getrocknet und anschließend bei 873 K für 5 h calciniert (Aufheizrate 2 K min⁻¹, 40 ml min⁻¹ Luftstrom).

### Titandioxid (Synthese mit Nanopartikel-Sol)

Bei den Synthesen wurde die eingesetzte Stoffmenge an Titan zum spezifischen Porenvolumen der Aktivkohlen konstantgehalten (n_{Ti}/V_{AK} = 4,52 mmol g cm⁻³). Titan(IV)tetrachlorid (Fluka, 98%) wurde bei Raumtemperatur tropfenweise zu Ethanol (Merck, 99,8%) hinzugefügt (n_{Ti}/V_{EtOH} = 0,425 mol L⁻¹). Die Reaktion führte zur Bildung von HCl- und Cl₂-Gasen. Es entstand eine gelbliche klare Lösung, welche weitere 30 min bei Raumtemperatur gealtert wurde. Mit dem so erhaltenen Nanopartikel-Sol wurde kugelförmige Aktivkohle (1 bis 10 g) imprägniert und bei 333 K für 48 h an Luft getrocknet. Anschließend wurde die beladene Aktivkohle bei 873 K für 5 h calciniert (Aufheizrate: 2 K min⁻¹, 40 ml min⁻¹ Luftstrom).

### Ausführungsbeispiel 8 (nichterfindungsgemäß):

Im Folgenden werden die Experimente zur selektiven katalytischen Reduktion (SCR) von Stickoxiden (NO) mit Kohlenwasserstoffen (Propen) als Reduktionsmittel beschrieben. Zur Durchführung der katalytischen Experimente wurde eine Strömungsapparatur mit einem Festbettreaktor aus Quarzglas genutzt. Der Strömungsreaktor wurde mit einem Gemisch aus 200 mg Korund und 200 mg Katalysator mit einer Kornfraktion von 100 bis 300 µm befüllt. Die Schüttung wurde im Reaktor mit Quarzwolle (Merck, > 98%) fixiert. Das Reaktionsgas bestand aus C₃H₆ (Air Liquide, in He, > 99,99 Vol.-%), NO (Messer, in He, > 99,99 Vol.-%), O₂ (Linde, 99,999 Vol.-%), und He (Air Liquide, > 99,99 Vol.-%). Dabei diente He als Trägergas. Der Gesamtvolumenstrom betrug 100 cm³ min⁻¹. Sämtliche Experimente wurden bei Umgebungsdruck durchgeführt.

Die modifizierte Verweilzeit W/F beträgt in den hier durchgeführten katalytischen Experimenten 0,12 g s cm⁻³. Dabei entspricht W der eingesetzten Katalysatormasse und F dem Gesamtvolumenstrom des gasförmigen Reaktandenstroms. Als Detektor kam ein nichtdispersiver Infrarotanalysator (Typ URAS 10 E, Firma *Hartmann & Braun*) zum Einsatz. Damit konnten im Reaktionsgas CO₂, C₃H₆, NO und N₂O detektiert werden. Dem Detektor wurde ein Konverter (Typ CGK-O, Firma *Hartmann & Braun*) vorgeschalten, da NO₂ vom Analysator nicht detektiert werden kann. Die Regelung der Anlage und die Datenaufzeichnung erfolgten durch einen Rechner mit angeschlossener Steuereinheit (Software WorkBench PC 2.1.0, Firma Strawberry Tree). Es wurden dabei konstante Heiz- und Abkühlraten angenommen.

Die jeweilige Katalysatorprobe wird in einem Heliumstrom (100 cm³ min⁻¹) mit einer Heizrate von 10 K min⁻¹ auf 400 °C erhitzt und 1 h bei dieser Temperatur aktiviert. Nach Abkühlung auf 200 °C innerhalb von 75 min beginnt das Temperaturstufenprofil. Mit Beginn des Stufenprofils wird das Reaktionsgasgemisch über den Katalysator geleitet. Die Temperaturschritte betragen jeweils 50 °C bei einer Heizrate von 10 K min⁻¹. Die Temperaturplateaus bei 200, 250, 300 und 350 °C werden jeweils 2 h und bei 400, 450, 500, 550 und 600 °C jeweils 1 h bis zur Einstellung eines stationären Zustandes gehalten. Abschließend wird im Heliumstrom mit einer Strömungsgeschwindigkeit von 60 cm³ min⁻¹ auf 60 °C abgekühlt.

Die Analytik erfolgte mittels nichtdispersiver Infrarot-Analyse. Das Messverfahren des URAS 10 E beruht auf der Eigenschaft heteroatomiger Gase, infrarote Strahlung im Wellenbereich = 2 bis 8 m zu absorbieren. Zwischen der gemessenen Absorption und der Konzentration der Messkomponente besteht nach Lambert-Beer ein exponentieller Zusammenhang. Die Verarbeitungselektronik liefert ein lineares Gleichstromsignal, welches von der Steuereinheit, dem PC, in Form einer ASCII-Datei gespeichert wird. Die Auswertung erfolgt mit dem Analysenprogramm Origin.

Es wurde ein handelsüblicher Vergleichskatalysator auf Basis von geträgertem TiO₂ untersucht; dieser untersuchte Katalysator (d. h. nur TiO₂ auf Träger) zeigt für die HC-SCR unter den verwendeten Bedingungen keine Aktivität: Der erreichte Umsatz an NO ist auf das zugefügte Korund zurückzuführen. Vergleichbare Ergebnisse werden auch für einen handelsüblichem Vergleichskatalysator auf Basis von geträgertem V₂O₅ (d. h. nur V₂O₅ auf Träger) erhalten.

Im Vergleich dazu zeigt das Katalysatorsystem auf Basis von V₂O₅-TiO₂ ausgezeichnete Umsätze; der Umsatz von NO nimmt mit steigenden Temperaturen stetig zu, was vor allem auf die Bildung von N₂O zurückzuführen ist. Das Katalysatorsystem auf Basis von V₂O₅-TiO₂ verfügt auch über eine hohe Selektivität zur Bildung von N₂O von über 80 %.

Ein Katalysatorsystem auf Basis nur von V₂O₅ sowie ein Katalysatorsystem auf Basis nur von TiO₂ zeigen im Gegensatz zu herkömmlichen Katalysatoren akzeptable Umsätze, welche aber deutlich unterhalb denen des vorliegend beschriebenen Katalysatorsystems auf Basis von V₂O₅-TiO₂ liegen.

## Patentansprüche

1. Verfahren zur Herstellung von porösen Materialien auf Basis von Oxiden des Titans und/oder des Vanadiums, insbesondere Verfahren zur Herstellung von Partikeln von Oxiden des Titans und/oder des Vanadiums, mittels Templatverfahren (Templatsynthese),
**dadurch gekennzeichnet,**
(a) **dass** zunächst in einem ersten Verfahrensschritt Titanoxid-Nanopartikel (TiO₂-Nanopartikel) und/oder Vanadiumoxid-Nanopartikel (V₂O₅-Nanopartikel) oder aber Titanoxid/Vanadiumoxid-Nanopartikel (TiO₂/V₂O₅-Nanopartikel) in die Poren eines porösen dreidimensionalen Matrixmaterials ("Exotemplat") eingebracht werden, wobei die Nanopartikel Teilchengrößen im Bereich von 0,1 nm bis 2.000 nm aufweisen und wobei als poröses dreidimensionales Matrixmaterial partikelförmige Aktivkohle eingesetzt wird, wobei das Matrixmaterial an seiner Oberfläche modifiziert ist, wobei die Oberflächenmodifizierung durch oxidative oder reduktive Behandlung des Matrixmaterials erfolgt,
wobei das Matrixmaterial an seiner Oberfläche hydrophil oder hydrophob ausgerüstet ist,
wobei die hydrophile Ausrüstung des Matrixmaterials durch oxidative chemische Behandlung des Matrixmaterials mit mindestens einem Oxidationsmittel, ausgewählt aus Salpetersäure, Peroxiden und Persäuren sowie deren Mischungen oder Kombinationen, erfolgt, wobei eine Anbringung hydrophiler Gruppen, ausgewählt aus OH-Gruppen und/oder Oxo-Gruppen, erfolgt, oder
wobei die hydrophobe Ausrüstung des Matrixmaterials durch reduktive Behandlung des Matrixmaterials in Gegenwart mindestens eines Reduktionsmittels in Form von Wasserstoff erfolgt; und
(b) **dass** nachfolgend in einem zweiten Verfahrensschritt das mit den Nanopartikeln beladene Matrixmaterial einer thermischen Behandlung zu Zwecken einer zumindest partiellen, vorzugsweise zu Zwecken einer zumindest im Wesentlichen vollständigen Entfernung des Matrixmaterials unterzogen wird.

2. Verfahren nach Anspruch 1, **dadurch gekennzeichnet,**
**dass** die Nanopartikel in Form einer Dispersion oder einer kolloidalen Lösung, insbesondere in Form eines Sols, in die Poren des Matrixmaterials eingebracht werden, insbesondere wobei die Dispersion oder kolloidale Lösung wässrig basiert oder organisch basiert, vorzugsweise wässrig basiert, ausgebildet ist; und/oder
**dass** die Einbringung der Nanopartikel in die Poren des Matrixmaterials mittels Imprägnieren des Matrixmaterials mit einer die Nanopartikel enthaltenden Dispersion oder kolloidalen Lösung, insbesondere einem Sol, erfolgt; und/oder
**dass** die Nanopartikel, insbesondere die Dispersionen oder kolloidalen Lösungen, vorzugsweise Sole, der Nanopartikel mittels Fällung erhalten werden, insbesondere ausgehend von Lösungen oder Dispersionen von Salzen oder anderen Vorläufersubstanzen, insbesondere Alkoxiden, der betreffenden Metalle, insbesondere wobei sich dem Verfahrensschritt der Einbringung der die Nanopartikel enthaltenden Dispersion oder kolloidalen Lösung, insbesondere des Sols, in die Poren des Matrixmaterials noch vor Durchführung der thermischen Behandlung gemäß Verfahrensschritt (b) zunächst ein Verfahrensschritt der Trocknung anschließt.

3. Verfahren nach einem der vorangehenden Ansprüche, **dadurch gekennzeichnet,**
**dass** die Teilchengrößen der Nanopartikel kleiner als die Durchmesser der Poren des Matrixmaterials sind und/oder dass das Verhältnis der Durchmesser der Poren des Matrixmaterials zu den Teilchengrößen der Nanopartikel >1:1, insbesondere mindestens 1,25 : 1, vorzugsweise mindestens 1,5 : 1, bevorzugt mindestens 1,75 : 1, besonders bevorzugt mindestens 2, ganz besonders bevorzugt mindestens 5, noch mehr bevorzugt mindestens 10, noch weiter bevorzugt mindestens 20, noch weiter bevorzugt mindestens 50, beträgt; und/oder
**dass** die Nanopartikel Teilchengrößen im Bereich von 0,5 nm bis 1.000 nm, vorzugsweise 0,75 nm bis 750 nm, besonders bevorzugt 1 nm bis 500 nm, ganz besonders bevorzugt 1 nm bis 250 nm, noch mehr bevorzugt 2 bis 100 nm, aufweisen und/oder dass die Nanopartikel mittlere Teilchengrößen (D50) im Bereich von 0,1 nm bis 500 nm, insbesondere 0,2 nm bis 100 nm, vorzugsweise 0,5 nm bis 50 nm, besonders bevorzugt 1 nm bis 25 nm, aufweisen.

4. Verfahren nach einem der vorangehenden Ansprüche, **dadurch gekennzeichnet, dass** das Einbringen der Nanopartikel in die Poren des Matrixmaterials in Gegenwart von und/oder zusammen mit mindestens einem Endotemplat erfolgt;
insbesondere wobei das Endotemplat bei der thermischen Behandlung gemäß Verfahrensschritt (b) zumindest partiell, vorzugsweise zumindest im Wesentlichen vollständig, entfernt wird; und/oder
insbesondere wobei das Endotemplat ausgewählt ist aus der Gruppe von organischen Polymeren und Copolymeren, insbesondere Blockcopolymeren, organischen Tensiden, mizellenbildenden Verbindungen und Ammoniumsalzen, insbesondere quarternären oder diquarternären Ammoniumsalzen, sowie deren Mischungen und Kombinationen; und/oder
insbesondere wobei das Endotemplat Bestandteil einer die Nanopartikel enthaltenden Dispersion oder kolloidalen Lösung, insbesondere eines Sols, ist; und/oder
insbesondere wobei das Endotemplat in einem molaren Verhältnis n_{Endotemplat}/n_{Metalle}, berechnet als Molverhältnis von eingesetztem Endotemplat zu eingesetzten Metallen der Metalloxide, im Bereich von 0,005 bis 0,2, insbesondere 0,01 bis 0,1, vorzugsweise 0,015 bis 0,08, eingesetzt wird.

5. Verfahren nach einem der vorangehenden Ansprüche, **dadurch gekennzeichnet,**
**dass** das Matrixmaterial mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist; und/oder
**dass** das Matrixmaterial ein Gesamtporenvolumen nach Gurvich im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweist und/oder dass 50 % bis 99 %, insbesondere 60 % bis 99 %, vorzugsweise 70 % bis 95 %, des Gesamtporenvolumens nach Gurvich des Matrixmaterials durch Poren mit Porendurchmessern von < 500 nm, insbesondere < 250 nm, vorzugsweise < 100 nm, gebildet sind; und/oder
**dass** das Matrixmaterial ein durch Poren mit Porendurchmessern ≤ 20 Å gebildetes Porenvolumen, insbesondere Mikroporenvolumen nach Carbon Black, im Bereich von 0,1 bis 2 cm³/g, insbesondere 0,2 bis 1,5 cm³/g, vorzugsweise 0,3 bis 1,1 cm³/g, besonders bevorzugt 0,4 bis 1 cm³/g, aufweist und/oder dass 20 % bis 95 %, insbesondere 30 % bis 95 %, vorzugsweise 40 % bis 90 %, des Gesamtporenvolumens des Matrixmaterials durch Poren mit Porendurchmessern von ≤ 20 Å (Mikroporen) gebildet sind; und/oder
**dass** das Matrixmaterial einen mittleren Porendurchmesser im Bereich von 1 bis 150 Å, insbesondere 1 bis 100 Å, bevorzugt 1,5 bis 75 Å, besonders bevorzugt 1,5 bis 50 Å, aufweist; und/oder
**dass** das Matrixmaterial eine spezifische BET-Oberfläche im Bereich von 500 m²/g bis 3.500 m²/g, insbesondere 600 bis 2.500 m²/g, vorzugsweise 700 bis 2.000 m²/g, besonders bevorzugt 800 bis 1.800 m²/g, aufweist.

6. Verfahren nach einem der vorangehenden Ansprüche, **dadurch gekennzeichnet,**
**dass** die thermische Behandlung gemäß dem zweiten Verfahrensschritt (b) unter oxidativen Bedingungen, insbesondere in Gegenwart von Sauerstoff, durchgeführt wird; und/oder
**dass** die thermische Behandlung gemäß dem zweiten Verfahrensschritt (b) zu einer zumindest partiellen, vorzugsweise zu einer zumindest im Wesentlichen vollständigen Entfernung des Matrixmaterials mittels Abbrand oder Pyrolyse führt; und/oder
**dass** im Rahmen der thermischen Behandlung gemäß dem zweiten Verfahrensschritt (b) eine Kalzinierung der Metalloxide und/oder ein zumindest partieller, vorzugsweise ein zumindest im Wesentlichen vollständiger Abbrand oder Pyrolyse des Matrixmaterials erfolgt; und/oder
**dass** die thermische Behandlung gemäß dem zweiten Verfahrensschritt (b) bei Temperaturen im Bereich von 300 bis 1.500 °C, insbesondere 400 bis 1.200 °C, vorzugsweise 500 bis 1.000 °C, besonders bevorzugt 550 bis 800 °C, und/oder über eine Dauer von 1 bis 20 Stunden, insbesondere 2 bis 15 Stunden, vorzugsweise 3 bis 10 Stunden, und/oder in Gegenwart einer sauerstoffhaltigen Atmosphäre durchgeführt wird.

7. Verfahren nach einem der vorangehenden Ansprüche, **dadurch gekennzeichnet,**
**dass** den porösen Materialien mindestens ein weiterer Inhaltsstoff und/oder mindestens eine zusätzliche Komponente zugesetzt wird, insbesondere ausgewählt aus katalytisch aktiven Metallen, vorzugsweise Cu, Ag, Pt, Au, Pd, Rh, Ir, Ru, Co und/oder Ni, und/oder aus Metalloxiden, vorzugsweise Aluminiumoxid, Bismutoxid, Eisenoxid, Kupferoxid, Lanthanoidoxid, insbesondere Ceroxid, Manganoxid, Molybdänoxid, Siliziumoxid, Wolframoxid und/oder Zirkoniumoxid.

## Claims

1. A method for the production of porous materials based on oxides of titanium and/or vanadium, in particular a method for the production of particles of oxides of titanium and/or vanadium, by means of the template process (template synthesis),
**characterised in that**
(a) initially in a first method step titanium oxide nanoparticles (TiO₂ nanoparticles) and/or vanadium oxide nanoparticles (V₂O₅ nanoparticles) or else titanium oxide/vanadium oxide nanoparticles (TiO₂/V₂O₅ nanoparticles) are introduced into the pores of a porous, three-dimensional matrix material ("exotemplate"), wherein the nanoparticles have particle sizes in the range of 0.1 nm to 2000 nm and wherein particulate activated carbon is used as the porous, three-dimensional matrix material, wherein the surface of the matrix material is modified, wherein the surface modification occurs by means of oxidative or reductive treatment of the matrix material,
wherein the surface of the matrix material is made hydrophilic or hydrophobic,
wherein the hydrophilic finishing of the matrix material is carried out by oxidative chemical treatment of the matrix material with at least one oxidising agent, selected from nitric acid, peroxides and peracids and mixtures or combinations thereof, wherein attachment of hydrophilic groups, selected from OH groups and/or oxo groups, occurs or
wherein the hydrophobic finishing of the matrix material is carried out by reductive treatment of the matrix material in the presence of at least one reducing agent in the form of hydrogen; and
(b) **in that** then in a second method step, the matrix material laden with the nanoparticles is subjected to thermal treatment for the purposes of at least partial, preferably for the purposes of at least substantially complete, removal of the matrix material.

2. The method according to claim 1, **characterised in that**
the nanoparticles are introduced into the pores of the matrix material in the form of a dispersion or a colloidal solution, in particular in the form of a sol, in particular wherein the dispersion or colloidal solution is water-based or organic-based, preferably water-based; and/or
**in that** the nanoparticles are introduced into the pores of the matrix material by means of impregnation of the matrix material with a dispersion or colloidal solution containing the nanoparticles, in particular with a sol; and/or
**in that** the nanoparticles, in particular the dispersions or colloidal solutions, preferably sols, of the nanoparticles are obtained by means of precipitation, in particular on the basis of solutions or dispersions of salts or other precursors, in particular alkoxides, of the relevant metals; in particular wherein initially a method step for drying follows the method step of introducing the nanoparticle-containing dispersion or colloidal solution, in particular the sol, into the pores of the matrix material before the thermal treatment is carried out according to method step (b).

3. The method according to one of the preceding claims, **characterised in**
**that** the particle sizes of the nanoparticles are smaller than the diameters of the pores of the matrix material and/or that the ratio of the diameters of the pores of the matrix material to the particle sizes of the nanoparticles is > 1:1, in particular at least 1.25:1, preferably at least 1.5:1, more preferably at least 1.75:1, particularly preferably at least 2, very particularly preferably at least 5, even more preferably at least 10, even more preferably at least 20, even more preferably at least 50; and/or
in that the nanoparticles have particle sizes in the range of 0.5 nm to 1000 nm, preferably 0.75 nm to 750 nm, particularly preferably 1 nm to 500 nm, very particularly preferably 1 nm to 250 nm, even more preferably 2 to 100 nm and/or that the nanoparticles have mean particle sizes (D50) in the range of 0.1 nm to 500 nm, in particular 0.2 nm to 100 nm, preferably 0.5 nm to 50 nm, particularly preferably 1 nm to 25 nm.

4. The method according to one of the preceding claims, **characterised in that** nanoparticles are introduced into the pores of the matrix material in the presence of and/or together with at least one endotemplate;
in particular wherein the endotemplate is at least partially, preferably at least substantially completely, removed during the thermal treatment according to method step (b); and/or
in particular wherein the endotemplate is selected from the group of organic polymers and copolymers, in particular block copolymers, organic surfactants, micelle-forming composites and ammonium salts, in particular quaternary or diquaternary ammonium salts, and mixtures and combinations thereof; and/or
in particular wherein the endotemplate is a component of a nanoparticle-containing dispersion or colloidal solution, in particular a sol; and/or
in particular wherein the endotemplate is used in a molar ratio n_{endotemplate}/nₘₑₜₐₗₛ, calculated as the molar ratio of used endotemplate to used metals of metal oxides, in the range of 0.005 to 0.2, in particular 0.01 to 0.1, preferably 0.015 to 0.08.

5. The method according to one of the preceding claims, **characterised in**
**that** the matrix material has mean particle sizes (D50), in particular mean particle diameters (D50) in the range of 0.01 to 1 mm, in particular 0.05 to 0.8 mm, preferably 0.1 to 0.6 mm, more preferably 0.15 to 0.5 mm, particularly preferably 0.2 to 0.4 mm; and/or
**that** the matrix material has a total pore volume according to Gurvich in the range of 0.4 to 4 cm³/g, in particular 0.5 to 3.5 cm³/g, preferably 0.6 to 3 cm³/g, particularly preferably 0.7 to 2.5 cm³/g, and/or that 50% to 99%, in particular 60% to 99%, preferably 70% to 95% of the total pore volume according to Gurvich of the matrix material is formed by pores having pore diameters of < 500 nm, in particular < 250 nm, preferably < 100 nm; and/or
**that** the matrix material has a pore volume formed by pores having pore diameters ≤ 20 A, in particular micro-pore volumes according to carbon black, in the range of 0.1 to 2 cm³/g, in particular 0.2 to 1.5 cm³/g, preferably 0.3 to 1.1 cm³/g, particularly preferably 0.4 to 1 cm³/g and/or that 20% to 95%, in particular 30% to 95%, preferably 40% to 90%, of the total pore volume of the matrix material is formed by pores having pore diameters of ≤ 20 Å (micro-pores); and/or
**that** the matrix material has a mean pore diameter in the range of 1 to 150 Å, in particular 1 to 100 Å, preferably 1.5 to 75 Å, particularly preferably 1.5 to 50 Å; and/or
**that** the matrix material has a specific BET surface in the range of 500 m²/g to 3500 m²/g, in particular 600 to 2500 m²/g, preferably 700 to 2000 m²/g, particularly preferably 800 to 1800 m²/g.

6. The method according to one of the preceding claims, **characterised in**
**that** the thermal treatment according to the second method step (b) is carried out under oxidative conditions, in particular in the presence of oxygen; and/or
**that** the thermal treatment according to the second method step (b) leads to an at least partial, preferably to an at least substantially complete, removal of the matrix material by means of combustion or pyrolysis; and/or
**that** in the course of the thermal treatment according to the second method step (b) a calcination of the mixed metal oxides and/or an at least partial, preferably an at least substantially complete, combustion or pyrolysis of the matrix material occurs; and/or
**that** the thermal treatment according to the second method step (b) is carried out at temperatures in the range of 300 to 1500°C, in particular 400 to 1200°C, preferably 500 to 1000°C, particularly preferably 550 to 800°C, and/or over a period of 1 to 20 hours, in particular 2 to 15 hours, preferably 3 to 10 hours, and/or in the presence of an oxygen-containing atmosphere.

7. The method according to one of the preceding claims, **characterised in**
**that** at least one further ingredient and/or at least one additional component is added to the porous materials, in particular selected from catalytically active metals, preferably Cu, Ag, Pt, Au, Pd, Rh, Ir, Ru, Co and/or Ni, and/or from metal oxides, preferably aluminium oxide, bismuth oxide, iron oxide, copper oxide, lanthanide oxide, in particular cerium oxide, manganese oxide, molybdenum oxide, silicon oxide, tungsten oxide and/or zirconium oxide.

## Revendications

1. Procédé de fabrication de matériaux poreux à base d'oxydes de titane et/ou vanadium, en particulier procédé de fabrication de particules d'oxydes de titane et/ou vanadium, au moyen d'un procédé matriciel (synthèse des matrices),
**caractérisé en ce que**
(a) d'abord, dans une première étape de procédé, des nanoparticules d'oxyde de titane (nanoparticules de TiO₂) et/ou des nanoparticules d'oxyde de vanadium (nanoparticules de V₂O₅) ou des nanoparticules d'oxyde de titane/oxyde de vanadium (nanoparticules de TiO₂/V₂O₅) sont introduites dans les pores d'un matériau matriciel (« exomatrice ») poreux tridimensionnel, dans lequel les nanoparticules présentent une granulométrie dans la plage comprise entre 0,1 nm et 2 000 nm et dans lequel, en tant que matériau matriciel poreux tridimensionnel, le charbon actif particulaire est utilisé, dans lequel le matériau matriciel est modifié sur sa surface, dans lequel la modification de surface s'effectue par traitement oxydatif ou réducteur du matériau matriciel,
dans lequel la surface du matériau matriciel est rendue hydrophile ou hydrophobe,
dans lequel l'apprêtage hydrophile du matériau matriciel est effectué par traitement chimique oxydatif du matériau matriciel à l'aide d'au moins un agent d'oxydation, choisi parmi l'acide nitrique, les peroxydes et les peracides ainsi que leurs mélanges ou combinaisons, dans lequel une application de groupes hydrophiles, choisis parmi les groupes OH et/ou les groupes oxo, est effectuée ou
dans lequel l'apprêtage hydrophobe du matériau matriciel est effectué par traitement réducteur du matériau matriciel en présence d'au moins un agent de réduction sous la forme d'hydrogène ; et
(b) **en ce qu'**ensuite, dans une deuxième étape de procédé, le matériau matriciel chargé de nanoparticules est soumis à un traitement thermique servant à éliminer, au moins partiellement, de préférence sensiblement totalement, le matériau matriciel.

2. Procédé selon la revendication 1, **caractérisé en ce que**
les nanoparticules, sous forme d'une dispersion ou d'une solution colloïdale, en particulier sous la forme d'un sol, sont introduites dans les pores du matériau matriciel, en particulier dans lequel la dispersion ou la solution colloïdale se présente sous forme de base aqueuse ou de base organique, de préférence de base aqueuse ; et/ou
**en ce que** l'introduction des nanoparticules dans les pores du matériau matriciel s'effectue par imprégnation du matériau matriciel par une dispersion ou une solution colloïdale, en particulier un sol, contenant les nanoparticules ; et/ou
**en ce que** les nanoparticules, en particulier les dispersions ou les solutions colloïdales, de préférence les sols, des nanoparticules sont obtenues par précipitation, en particulier en partant de solutions ou de dispersions de sels ou d'autres précurseurs, en particulier des alcoxydes, des métaux concernés, en particulier dans lequel l'étape de procédé d'introduction de la dispersion ou de la solution colloïdale, en particulier du sol, contenant les nanoparticules dans les pores du matériau matriciel, encore avant la mise en œuvre du traitement thermique selon l'étape de procédé (b), est d'abord suivie d'une étape de séchage.

3. Procédé selon l'une quelconque des revendications précédentes, **caractérisé en ce que**
la granulométrie des nanoparticules est inférieure au diamètre des pores du matériau matriciel et/ou **en ce que** le rapport entre le diamètre des pores du matériau matriciel et la granulométrie des nanoparticules est > 1 : 1, en particulier au moins 1,25 : 1, de préférence au moins 1,5 : 1, préférentiellement au moins 1,75 : 1, plus préférentiellement au moins 2, mieux encore au moins 5, de préférence encore au moins 10, encore plus préférentiellement au moins 20, idéalement au moins 50 ; et/ou
**en ce que** les nanoparticules présentent une granulométrie dans la plage comprise entre 0,5 nm et 1 000 nm, de préférence entre 0,75 nm et 750 nm, plus préférentiellement entre 1 nm et 500 nm, mieux encore entre 1 nm et 250 nm, de préférence encore entre 2 et 100 nm et/ou **en ce que** les nanoparticules présentent une granulométrie moyenne (D50) dans la plage comprise entre 0,1 nm et 500 nm, en particulier entre 0,2 nm et 100 nm, de préférence entre 0,5 nm et 50 nm, plus préférentiellement entre 1 nm et 25 nm.

4. Procédé selon l'une quelconque des revendications précédentes, **caractérisé en ce que** l'introduction des nanoparticules dans les pores du matériau matriciel s'effectue en présence d'au moins une endomatrice et/ou conjointement avec au moins une endomatrice ;
en particulier dans lequel l'endomatrice est éliminée, au moins partiellement, de préférence au moins sensiblement totalement, par le traitement thermique selon l'étape de procédé (b) ; et/ou
en particulier dans lequel l'endomatrice est sélectionnée dans le groupe constitué par les polymères et les copolymères organiques, en particulier les copolymères séquencés, les agents tensioactifs organiques, les composés formant micelles et les sels d'ammonium, en particulier les sels d'ammonium quaternaire ou diquaternaire, ainsi que leurs mélanges et combinaisons ; et/ou
en particulier dans lequel l'endomatrice est un constituant d'une dispersion ou d'une solution colloïdale, en particulier d'un sol, contenant les nanoparticules ; et/ou
en particulier dans lequel l'endomatrice est utilisée dans un rapport molaire n_{endomatrice}/n_{métaux}, exprimé en rapport molaire entre l'endomatrice utilisée et les métaux utilisés des oxydes métalliques, dans la plage comprise entre 0,005 et 0,2, en particulier entre 0,01 et 0,1, de préférence entre 0,015 et 0,08.

5. Procédé selon l'une quelconque des revendications précédentes, **caractérisé en ce que**
le matériau matriciel présente une granulométrie moyenne (D50), en particulier un diamètre particulaire moyen (D50), dans la plage comprise entre 0,01 et 1 mm, en particulier entre 0,05 et 0,8 mm, préférentiellement entre 0,1 et 0,6 mm, de préférence entre 0,15 et 0,5 mm, plus préférentiellement entre 0,2 et 0,4 mm ; et/ou
**en ce que** le matériau matriciel comprend un volume poreux total selon Gurvich dans la plage comprise entre 0,4 et 4 cm³/g, en particulier entre 0,5 et 3,5 cm³/g, préférentiellement entre 0,6 et 3 cm³/g, plus préférentiellement entre 0,7 et 2,5 cm³/g et/ou **en ce que** entre 50 % et 99 %, en particulier entre 60 % et 99 %, préférentiellement entre 70 % et 95 % du volume poreux total selon Gurvich du matériau matriciel sont formés par les pores présentant un diamètre de pore de < 500 nm, en particulier < 250 nm, préférentiellement < 100 nm ; et/ou
**en ce que** le matériau matriciel comprend un volume poreux, en particulier un volume microporeux selon le principe du noir de carbone, formé par les pores présentant un diamètre de ≤ 20 Å, dans la plage comprise entre 0,1 et 2 cm³/g, en particulier entre 0,2 et 1,5 cm³/g, préférentiellement entre 0,3 et 1,1 cm³/g, plus préférentiellement entre 0,4 et 1 cm³/g et/ou **en ce que** entre 20 % et 95 %, en particulier entre 30 % et 95 %, préférentiellement entre 40 % et 90 % du volume poreux total du matériau matriciel sont formés par les pores présentant un diamètre de ≤ 20 Å (micropores) ; et/ou
**en ce que** le matériau matriciel présente un diamètre moyen des pores dans la plage de 1 à 150 Å, en particulier de 1 à 100 Å, préférentiellement de 1,5 à 75 Å, plus préférentiellement de 1,5 à 50 Å ; et/ou
**en ce que** le matériau matriciel présente une surface spécifique BET dans la plage comprise entre 500 m²/g et 3 500 m²/g, en particulier entre 600 et 2 500 m²/g, préférentiellement entre 700 et 2 000 m²/g, plus préférentiellement entre 800 et 1 800 m²/g.

6. Procédé selon l'une quelconque des revendications précédentes, **caractérisé en ce que**
le traitement thermique est effectué selon la deuxième étape de procédé (b) dans des conditions oxydatives, en particulier en présence d'oxygène ; et/ou
**en ce que** le traitement thermique selon la deuxième étape de procédé (b) provoque une élimination, au moins partielle, de préférence au moins sensiblement totale, du matériau matriciel par grillage ou par pyrolyse ; et/ou
**en ce que** dans le cadre du traitement thermique selon la deuxième étape de procédé (b) une calcination des oxydes métalliques et/ou un grillage ou une pyrolyse, au moins partiel(le), de préférence au moins sensiblement total(e), du matériau matriciel est effectué(e) ; et/ou
**en ce que** le traitement thermique selon la deuxième étape de procédé (b) est mis en œuvre à des températures dans la plage comprise entre 300 et 1 500 °C, en particulier entre 400 et 1 200 °C, préférentiellement entre 500 et 1 000 °C, plus préférentiellement entre 550 et 800 °C et/ou sur une durée de 1 à 20 heures, de préférence de 2 à 15 heures, préférentiellement de 3 à 10 heures et/ou en présence d'une atmosphère oxygénée.

7. Procédé selon l'une quelconque des revendications précédentes, **caractérisé en ce que**
aux matériaux poreux, au moins un autre ingrédient et/ou au moins un composant supplémentaire est ajouté, en particulier choisis parmi les métaux catalytiquement actifs, de préférence Cu, Ag, Pt, Au, Pd, Rh, Ir, Ru, Co et/ou Ni et/ou les oxydes métalliques, de préférence l'oxyde d'aluminium, l'oxyde de bismuth, l'oxyde de fer, l'oxyde de cuivre, l'oxyde de lanthanide, en particulier l'oxyde de cérium, l'oxyde de manganèse, l'oxyde de molybdène, l'oxyde de silicium, l'oxyde de tungstène et/ou l'oxyde de zirconium.
